# FASCICULE DE BREVET EUROPEEN

(11) **EP 3 314 420 B1**
(45) Date de publication et mention de la délivrance du brevet: **17.04.2019**
(21) Numéro de dépôt: 16750893.6
(22) Date de dépôt: 28.06.2016
(51) Int. Cl.: G06F 8/41, G06F 9/448, G06F 9/455

(54) **PROCÉDÉ D'EXÉCUTION D'UN PROGRAMME D'ORDINATEUR COMPORTANT UNE FONCTION PARAMÉTRÉE**
VERFAHREN ZUR AUSFÜHRUNG EINES COMPUTERPROGRAMMS MIT EINER PARAMETRISIERTEN FUNKTION
METHOD FOR EXECUTING A COMPUTER PROGRAM WITH A PARAMETERISED FUNCTION

(30) Priorité: 29.06.2015 FR 1556097
(43) Date de publication de la demande: 02.05.2018
(73) Titulaire: Commissariat à l'Energie Atomique et aux Energies Alternatives, 75015 Paris (FR)
(72) Inventeur: QUEVA, Caroline, 38530 Pontcharra (FR); COUROUSSE, Damien, 38100 Grenoble (FR); LHUILLIER, Yves, 91120 Palaiseau (FR)
(74) Mandataire: Colombo, Michel
(86) Numéro de dépôt international: PCT/FR2016/051583
(87) Numéro de publication internationale: WO 2017/001753

(56) Documents cités:
- EP-A2- 0 908 819
- US-A1- 2010 095 284
- US-B1- 6 427 234
- IGOR RAFAEL DE ASSIS COSTA ET AL: "Just-in-time value specialization", COMPUTER LANGUAGES, SYSTEMS & STRUCTURES, vol. 40, no. 2, 1 juillet 2014 (2014-07-01), pages 37-52, XP055259309, AMSTERDAM, NL ISSN: 1477-8424, DOI: 10.1016/j.cl.2013.11.001 cité dans la demande

## Description

L'invention concerne un procédé d'exécution d'un programme d'ordinateur comportant une fonction paramétrée susceptible d'être exécutée une ou plusieurs fois au cours de l'exécution du programme. L'invention a également pour objet un support d'enregistrement d'informations, un programme d'ordinateur, ainsi qu'une unité centrale pour la mise en oeuvre de ce procédé.

La fonction paramétrée comporte au moins un paramètre dont la valeur est obtenue au moment où la fonction est appelée pour être exécutée par un microprocesseur ou durant son exécution par le microprocesseur.

Des procédés connus pour exécuter de tels programmes d'ordinateur comportent :
a) la fourniture d'un code générique de la fonction dans lequel chaque paramètre de la fonction est codé comme une variable de sorte que ce code générique ne contient pas en lui-même la valeur de ce paramètre mais contient une opération de lecture de sa valeur à une adresse spécifiée par le code générique,
b) l'enregistrement dans une mémoire de plusieurs codes spécialisés de cette fonction, écrits dans le langage machine du microprocesseur, chaque code spécialisé réalisant, lorsqu'il est exécuté par le microprocesseur, la même fonction que le code générique mais dans le cas particulier où au moins un paramètre de la fonction est spécialisé, la spécialisation d'un paramètre de la fonction consistant à affecter une valeur spécifique à ce paramètre puis à traiter ce paramètre non plus comme une variable mais comme une constante de sorte que le code spécialisé ne comporte aucune opération de lecture de sa valeur à une adresse située en dehors de la plage continue d'adresses où est enregistré ce code spécialisé, les codes spécialisés enregistrés différant les uns des autres par la valeur affectée au même paramètre spécialisé ou par le paramètre qui a été spécialisé,
c) pour chaque code spécialisé, la mémorisation, dans une table, d'une adresse où est enregistré ce code spécialisé dans la mémoire,
d) lors de l'exécution du programme, le microprocesseur obtient une valeur numérique pour chaque paramètre de la fonction, puis
e) le microprocesseur recherche, dans la table, l'adresse d'un code spécialisé apte, lorsqu'il est exécuté par le microprocesseur, à réaliser la fonction paramétrée avec les valeurs obtenues lors de l'étape d), puis
f) si une telle adresse existe dans la table, le microprocesseur réalise la fonction en exécutant directement le code spécialisé enregistré dans la mémoire à cette adresse sans utiliser le code générique, et sinon
g) le microprocesseur réalise cette fonction en utilisant son code générique.

Dans cette description, par l'expression « lecture de la valeur d'un paramètre à une adresse », on désigne aussi bien l'opération de lecture de la valeur de ce paramètre dans une mémoire que dans un registre. Ainsi, le terme « adresse » désigne aussi bien une adresse dans une mémoire qu'un identifiant d'un registre dans lequel doit être lue la valeur de ce paramètre.

Le code spécialisé d'une fonction s'exécute avec un coût moindre que le code générique de cette fonction, notamment parce qu'il a pu être optimisé, à partir des valeurs spécifiques connues des paramètres. Par exemple, le coût peut être le temps d'exécution, la consommation électrique, la puissance électrique consommée, la température, le niveau de bruit électrique ou acoustique. Par exemple, contrairement au code générique, le code spécialisé ne comporte pas d'opération de lecture de la valeur des paramètres spécialisés en dehors de la plage d'adresses où est enregistré ce code spécialisé. Ainsi, pour réaliser la même fonction, le code spécialisé comporte moins d'instructions que le code générique ou comporte des instructions de lecture moins coûteuses par exemple si les instructions de lecture sont réarrangées pour accéder à de la mémoire locale. Si son exécution nécessite moins d'accès à la mémoire, il sera probablement plus rapide et donc moins coûteux. C'est pour cela que, dès que c'est possible, il est généralement préférable d'exécuter le code spécialisé plutôt que le code générique.

Jusqu'à présent, il était connu d'enregistrer un seul code spécialisé pour chaque fonction paramétrée différente. Dans les procédés connus, si un nouveau code spécialisé est généré pour une fonction, alors qu'il existe déjà un ancien code spécialisé enregistré en mémoire pour cette même fonction, le nouveau code spécialisé remplace l'ancien code spécialisé. La recherche en mémoire du code spécialisé à exécuter est donc simple, puisqu'il n'existe, au maximum, qu'un seul code spécialisé par fonction paramétrée différente. Un tel procédé connu est par exemple décrit dans l'article suivant :
- I.R.de Assis Costa et al., « Just-in-time value specialization », Computer languages, Systems and Structures, Vol. 40, n° 2, pp 37-52, 2014.

Plus récemment, dans la demande US2010/0095284, il a été proposé d'enregistrer dans la mémoire, non pas un seul code spécialisé par fonction, mais plusieurs. Ainsi, à un instant donné, la mémoire peut contenir plusieurs codes spécialisés de la même fonction, chacun de ces codes spécialisés mémorisés ayant été obtenu en spécialisant différemment les paramètres de cette fonction. Pour retrouver en mémoire le code spécialisé à exécuter, la demande US2010/0095284 enseigne de construire un identifiant qui dépend à la fois de la fonction et des valeurs spécifiques des arguments d'appel spécialisés. Ensuite, l'identifiant construit est associé à l'emplacement où est enregistré le code spécialisé correspondant. Enfin, pour retrouver en mémoire ce code spécialisé, l'identifiant du code spécialisé recherché est d'abord construit à partir des valeurs des arguments de la fonction paramétrée appelée. C'est cet identifiant construit qui est utilisé pour retrouver dans la mémoire le code spécialisé s'il existe (voir par exemple les paragraphes 23, 24 et 29 de la demande US2010/0095284). Pour l'homme du métier, la construction d'un identifiant de la fonction et des valeurs spécifiques des paramètres spécialisés est typiquement obtenue, par exemple, à l'aide d'une fonction de hachage. Ainsi, il ne peut pas être totalement exclu que deux identifiants construits pour deux fonctions f et g différentes et pour des valeurs spécifiques différentes soient identiques. Ceci peut conduire, si rien n'est fait, à l'exécution de la fonction f à la place de la fonction g ou vice versa. Pour éviter ce problème, dans une implémentation réelle de l'enseignement de la demande US2010/0095284, il faut donc en plus implémenter une routine anti-collision (habituellement appelée « garde ») qui va vérifier que c'est bien le code spécialisé de la bonne fonction qui va être exécuté avant de lancer l'exécution de ce code spécialisé. La construction des identifiants et l'exécution de la routine anti-collision induit un coût supplémentaire. De plus, généralement, la routine anti-collision (code de garde) est incluse dans le préambule du code spécialisé. Cela présente l'inconvénient d'augmenter le nombre d'opérations que doit réaliser le code spécialisé et d'augmenter le coût de la génération de code spécialisé.

De l'état de la technique est également connu de :
- US6427234B1, et
- EP0908819A2.
En particulier, US6427234B1 décrit que la recherche du code spécialisé dans une mémoire est réalisée en comparant les valeurs actuelles des paramètres à celles utilisées pour créer le code spécialisé. EP0908819A2 décrit que la spécialisation d'une fonction est déclenchée en fonction du nombre de fois où cette fonction est exécutée.

L'invention vise entre autres à proposer un procédé différent de celui de la demande US2010/0095284 dans lequel le temps mis pour rechercher et vérifier que le code spécialisé trouvé est bien le bon code spécialisé à exécuter, est réduit.

Elle a donc pour objet un procédé d'exécution d'un programme d'ordinateur conforme à la revendication 1.

Le fait d'enregistrer, pour chaque code spécialisé, les valeurs spécifiques des paramètres spécialisés dans la table permet simultanément :
- d'utiliser les valeurs des paramètres spécialisés comme un critère de recherche lors de la recherche de l'adresse d'un code spécialisé dans la table, et
- de vérifier en même temps que l'adresse trouvée correspond bien à un code spécialisé apte à réaliser la fonction paramétrée avec les valeurs des paramètres obtenues lors de l'appel de cette fonction ou lors de son exécution.

Dès lors, contrairement au procédé de la demande US2010/0095284, il n'est pas nécessaire pour exécuter un code spécialisé de procéder à deux opérations successives, c'est-à-dire :
1) Construire un identifiant du code spécialisé recherché en fonction des valeurs des paramètres obtenus lors de l'appel ou de l'exécution de la fonction, puis
2) Vérifier que le code spécialisé trouvé correspond bien à celui qui permet de réaliser la fonction paramétrée avec les valeurs obtenues des paramètres.

Ainsi, le procédé revendiqué limite le nombre d'opérations à réaliser avant de déclencher l'exécution d'un code spécialisé. Il est donc moins coûteux. De plus, il n'est plus nécessaire d'introduire dans chaque code spécialisé les opérations de la routine anti-collision. Dès lors, le nombre d'opérations à réaliser par le code spécialisé est réduit et le nombre d'opérations à réaliser par le générateur de code pour générer ce code spécialisé est également réduit.

Enfin, l'utilisation d'une routine de recherche écrite en langage machine et comportant l'ensemble du contenu de la table codé en tant que constante permet de réduire le coût d'exécution du programme lorsque l'étape e) est plus fréquemment exécutée que l'étape c). Or il a été découvert que ceci est presque toujours le cas de sorte que cette façon de procéder réduit encore plus le coût d'exécution du programme d'ordinateur.

Les modes de réalisation de ce procédé peuvent comporter une ou plusieurs des caractéristiques des revendications dépendantes.

Les modes de réalisation de ce procédé d'exécution d'un programme d'ordinateur présentent en outre les avantages suivants :
- L'utilisation de branchement conditionnel direct à l'intérieur de la routine de recherche permet dans la majorité des cas de réduire le coût de l'exécution du programme. En effet un branchement conditionnel direct permet de passer directement de l'exécution de la routine de recherche à l'exécution du code spécialisé recherché sans avoir d'abord à stocker dans un registre l'adresse du code spécialisé trouvé dans la table avant de lancer son exécution.
- En exécutant la routine de collecte statistique après les branchements conditionnels directs de la routine de recherche, cette routine de collecte de données statistiques n'est exécutée que s'il n'y a pas d'égalité entre les valeurs des paramètres obtenus lors de l'étape d) et des valeurs des paramètres spécialisés enregistrées dans la table. Dès lors, les branchements conditionnels directs servent aussi à filtrer les appels à cette routine de collecte statistique, ce qui limite le nombre de fois où elle est exécutée et donc accélère la vitesse d'exécution du programme.
- La collecte de données statistiques sur les valeurs utilisées pour les paramètres de la fonction permet de déclencher la génération de codes spécialisés en fonction de l'utilisation du programme exécuté et donc d'adapter l'exécution du programme d'ordinateur au contexte dans lequel il est exécuté.
- Déclencher la génération d'un code spécialisé à partir du rapport Kgen/(Klib - Kdyn) permet de déclencher la génération d'un code spécialisé même si le cumul du coût pour générer ce code spécialisé et du coût pour exécuter ce code spécialisé est supérieur au coût d'exécution du code générique de la fonction. En effet, cela permet de prendre en compte le fait que le coût Kgen peut être amorti non pas après une seule exécution du code spécialisé, mais seulement après plusieurs exécutions de ce code spécialisé.
- L'enregistrement dans la table, associé à chaque adresse du code spécialisé, d'un identifiant de la fonction paramétrée qui a été spécialisée permet de spécialiser plusieurs fonctions différentes, et donc d'accélérer l'exécution du programme.
- La mémorisation dans la table d'un identifiant du ou des paramètres qui ont été spécialisés permet de générer et d'utiliser des codes spécialisés obtenus en spécialisant différents paramètres de cette fonction. On augmente ainsi le nombre de codes spécialisés différents qui peuvent être générés, et donc le nombre de possibilités pour accélérer l'exécution du programme. En fin de compte, cela se traduit, dans la plupart des cas, par une réduction du coût de l'exécution du programme.

L'invention a également pour objet un support d'enregistrement d'informations et un programme d'ordinateur.

Enfin, l'invention a également pour objet une unité centrale électronique pour la mise en oeuvre du procédé revendiqué.

L'invention sera mieux comprise à la lecture de la description qui va suivre, donnée uniquement à titre d'exemple non limitatif et faite en se référant aux dessins sur lesquels :
- la figure 1 est une illustration schématique d'une unité centrale programmée pour exécuter un programme d'ordinateur comportant des fonctions paramétrées ;
- la figure 2 est une illustration schématique de la structure d'une table utilisée dans l'unité centrale de la figure 1 ;
- la figure 3 est un organigramme d'un procédé d'exécution d'un programme d'ordinateur à l'aide de l'unité centrale de la figure 1 ;
- la figure 4 est un pseudo-code partiel d'un programme d'ordinateur susceptible d'être exécuté à l'aide du procédé de la figure 3, et
- la figure 5 est un pseudo-code partiel d'une routine de recherche mise en oeuvre dans le procédé de la figure 3.

Dans ces figures, les mêmes références numériques sont utilisées pour désigner les mêmes éléments. Dans la suite de cette description, les caractéristiques et fonctions bien connues de l'homme du métier ne sont pas décrites en détails.

Dans cette description, une « instruction » désigne une instruction machine directement exécutable par un microprocesseur. Une telle instruction est typiquement constituée :
- d'un opcode, ou code d'opération, codant la nature de l'opération à exécuter, et
- d'un ou plusieurs opérandes définissant la ou les valeurs des paramètres de cette opération.

Un « code binaire » ou un « code écrit en langage machine » est un ensemble d'instructions machines. Il s'agit typiquement d'un fichier contenant une succession de bits portant la valeur « 0 » ou « 1 », ces bits codant les instructions à exécuter par le microprocesseur. Le code binaire est directement exécutable par le microprocesseur, c'est-à-dire sans nécessiter une compilation ou une interprétation préalable.

On parle d'exécution d'une fonction pour désigner l'exécution des instructions réalisant cette fonction.

Dans un souci de simplification, dans cette description, les instructions ne sont pas représentées sous forme binaire, mais plutôt sous une forme symbolique exprimée dans un langage machine ou assembleur. En particulier, l'opcode est représenté de façon connue par un mnémonique.

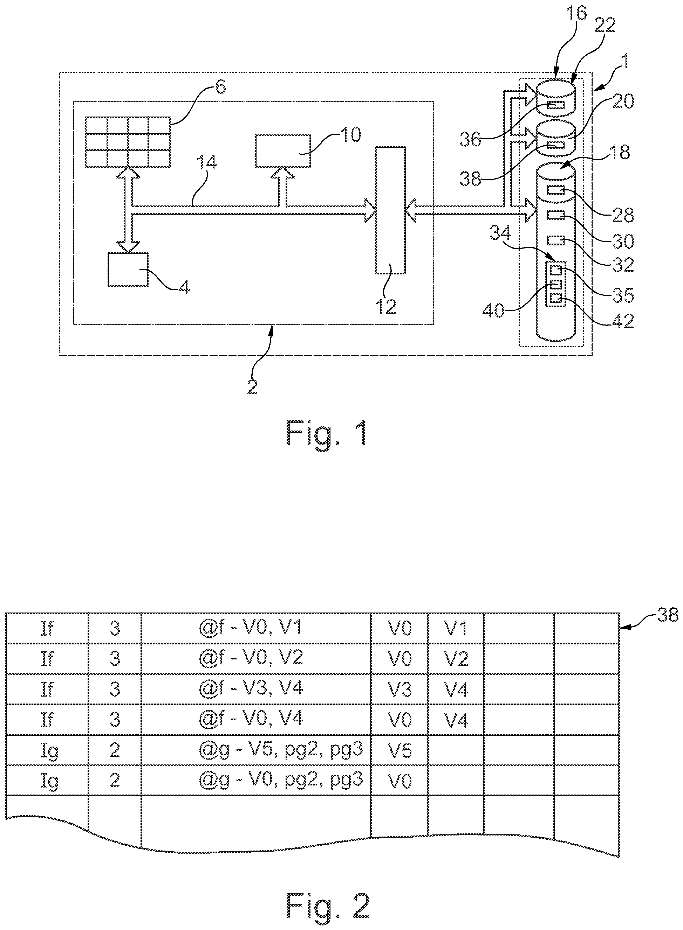

La figure 1 représente une unité centrale électronique 1 comportant un microprocesseur 2 et un support 16 d'enregistrement d'informations. Ce microprocesseur 2 comporte ici :
- une unité arithmétique et logique 4 ;
- un ensemble de registres 6 ;
- un module de commande 10 ;
- une interface 12 d'entrée/sortie de données qui permet d'accéder au support 16 par l'intermédiaire d'un bus mémoire.

Le support 16 comporte, par exemple :
- une mémoire programme 18, par exemple non volatile, telle qu'une mémoire EEPROM ou Flash, et
- une mémoire 22 à accès non séquentiel plus connu sous l'acronyme de « RAM » (Random Access Memory), et
- une mémoire 20 de données.

Ces mémoires 18, 20 et 22 peuvent être des mémoires matérielles distinctes les unes des autres ou des mémoires logicielles. Les mémoires logicielles correspondent à différentes plages d'adresses, par exemple, à l'intérieur d'une même mémoire matérielle. Il peut aussi s'agir d'une combinaison de mémoires matérielles et logicielles. En particulier, ici, la mémoire 22 est une mémoire cache logicielle et non pas une mémoire cache matérielle.

Les mémoires 18 et 22 sont configurées pour stocker des instructions devant être exécutées par l'unité 4. Typiquement, un compteur ordinal, également appelé « pointeur d'instruction », du microprocesseur 2 pointe sur l'emplacement de la mémoire 18 ou 22 contenant la prochaine instruction à exécuter par l'unité 4. Le microprocesseur 2 est notamment configuré pour exécuter les instructions stockées dans la mémoire 18 ou 22, la plus part du temps dans l'ordre où ces instructions sont stockées dans ces mémoires, et, le cas échéant, à stocker le résultat de ces instructions exécutées dans un ou plusieurs des registres 6 ou dans la mémoire 20 ou 22. Ici, on considère qu'une instruction, pour être exécutée par l'unité 4, doit être placée dans la mémoire 18 ou 22. Dans cette description, on utilisera comme synonymes « exécution par le microprocesseur 2 » et « exécution par l'unité 4 ».

Le module 10 est configuré pour déplacer des mots mémoires entre les registres 6, le support 16, et l'interface 12. On notera que les mots mémoires enregistrés dans la mémoire 22 peuvent être traités, en alternance, soit comme des instructions soit comme des données. À cet effet, le microprocesseur comporte également ici un bus d'échange de données et d'instructions 14. L'interface 12 est notamment apte à acquérir des données, par exemple depuis la mémoire 20 extérieure au microprocesseur 2. Dans ce mode de réalisation, il n'est pas fait de distinction entre le bus de données et le bus d'instructions. Ces deux types de bus sont représentés par le seul bus 14.

Dans ce mode de réalisation, les ressources mémoires utilisées sont très limitées. Par exemple, la taille de la mémoire 22 est inférieure à 1 Mo ou 500 ko ou 128 ko. Par exemple, la mémoire 22 est une mémoire volatile.

Un tel microprocesseur 2 est bien connu de l'homme du métier et ne sera pas décrit en détail. Dans cet exemple, le microprocesseur 2 est le microprocesseur MSP430 commercialisé par la société « Texas Instruments ».

La mémoire 18 comporte un programme 28 à exécuter. Il peut s'agir d'un programme apte à commander des périphériques électroniques tels qu'une interface homme-machine ou une imprimante. Il peut également s'agir d'un programme apte à acquérir des données transmises par des capteurs électroniques, puis à les traiter. Il peut aussi s'agir d'un programme qui traite des données techniques comme par exemple un programme de simulation assistée par ordinateur. De façon plus générale, l'enseignement donné ici s'applique à tout type de programmes exécutés par un microprocesseur.

Dans ce mode de réalisation, à titre d'illustration, le programme 28 n'est pas directement écrit dans le langage machine du microprocesseur 2, mais dans un langage intermédiaire indépendant des spécificités de l'architecture matérielle de l'unité centrale 1 sur laquelle doit être exécuté ce programme. Par exemple, le programme 28 est écrit en Bytecode, tel que du Bytecode Java®.

Le programme 28 comporte de nombreuses fonctions paramétrées. Une fonction paramétrée est une fonction qui comporte au moins un paramètre dont la valeur est obtenue au moment où cette fonction est appelée pour être exécutée par le microprocesseur 2 ou pendant son exécution par le microprocesseur 2. Fréquemment, un paramètre est un argument de la fonction dont la valeur est obtenue au moment où cette fonction est appelée pour être exécutée par le microprocesseur 2. On dit alors que le paramètre est explicite, car il figure explicitement comme argument de la fonction dont la valeur doit être fournie pour que la fonction puisse être réalisée. C'est le cas le plus courant pour une fonction paramétrée. Toutefois, il existe aussi des paramètres qui n'apparaissent pas comme étant explicitement des arguments de la fonction, mais dont les valeurs sont lues en mémoire lors de la réalisation de cette fonction. C'est par exemple le cas d'une variable globale. Une telle variable globale est déclarée généralement au début du programme et peut-être utilisée à l'intérieur de toutes les fonctions du programme sans qu'il soit nécessaire que cette variable globale apparaisse explicitement dans la liste des arguments de ces fonctions. Par exemple, une variable globale peut être utilisée pour contenir la taille d'une image ou d'une matrice. Un autre exemple d'un paramètre implicite est une variable destinée à contenir une valeur retournée par une sous-fonction appelée par la fonction.

Puisque les valeurs des paramètres ne sont pas connues au moment où le programme est écrit, mais seulement au moment de son exécution, chaque paramètre est codé comme une variable dans le code générique de la fonction paramétrée. Ainsi, le code générique de chaque fonction paramétrée, contenu dans le programme 28, comporte des opérations de lecture de la valeur de chaque paramètre dans une mémoire, avant de pouvoir traiter ce paramètre. Par exemple, la valeur du paramètre est utilisée, à l'intérieur du code générique de la fonction, comme opérande d'une ou plusieurs opérations à réaliser. Il peut s'agir de n'importe quelle opération. Par exemple, ces opérations sont des opérations arithmétiques, booléennes ou de lecture d'une données à une adresse spécifiée par la valeur du paramètre. Le paramètre peut aussi être de nature non fonctionnelle. Par exemple, il contient des informations sur les caractéristiques de la micro-architecture du microprocesseur 2 sur lequel va être exécuté le programme 28.

Une fonction correspond à au moins un bloc de base. Un bloc de base est une succession d'instructions à exécuter systématiquement les unes après les autres et donc situées à des adresses consécutives dans la mémoire programme 8 lorsqu'elles sont chargées dans cette mémoire. Un bloc de base comprend un seul point d'entrée (la première instruction du bloc) et un seul point de sortie (la dernière instruction). Ce bloc de base se termine par un branchement, c'est-à-dire un saut à une adresse non-consécutive de la mémoire programme 10. Le début du bloc de base débute par une instruction vers laquelle un branchement du programme pointe. Toutefois, une fonction n'est pas limitée à un seul bloc de base et peut comporter plusieurs blocs de base dont les exécutions doivent être enchaînées les unes après les autres. Par la suite, pour simplifier cette description, on considère que le programme 28 comporte deux fonctions paramétrées f et g. La fonction f comporte deux paramètres notés pf1 et pf2 et la fonction g comporte trois paramètres notés pg1, pg2 et pg3.

Dans le cas particulier décrit ici, pour exécuter le programme 28 sur le microprocesseur 2, la mémoire 18 comporte aussi :
- le code d'un interpréteur 30 de Bytecode,
- le code d'un générateur 32 de code spécialisé, et
- le code d'un gestionnaire 34 du flux d'exécution du programme à exécuter.

Chacun de ces codes 30, 32 et 34 est, de préférence, écrit dans le langage machine du microprocesseur 2 et donc directement exécutable par ce microprocesseur. Dans cette description, lorsqu'on dit qu'un code, une instruction ou un bloc d'instructions est directement exécutable par le microprocesseur 2, cela signifie que ce code, cette instruction ou ce bloc d'instructions est écrit dans le langage machine du microprocesseur 2 et qu'il n'est donc pas nécessaire de le compiler ou de l'interpréter avant de pouvoir l'exécuter.

L'interpréteur 30 est également connu sous le terme de « machine virtuelle » dans le cas particulier du Bytecode Java. L'interpréteur contient un jeu de routines en langage machine associées à chaque instruction contenue dans le jeu d'instruction bytecode. L'interprétation consiste à exécuter la routine en langage machine correspondant à chaque instruction bytecode du programme.

Le générateur 32 génère un code binaire spécialisé à partir du code générique d'une fonction et l'enregistre dans la mémoire 22. Dans ce mode de réalisation, le générateur 32 est un compilateur à la volée plus connu sous le nom de « compilateur JIT (Just In Time) ». Ici, il est utilisé pour générer, à partir du code générique d'une fonction, un code spécialisé de cette fonction en spécialisant un ou plusieurs des paramètres de cette fonction. La spécialisation d'un paramètre d'une fonction consiste à affecter une valeur spécifique à ce paramètre, puis à optimiser et à compiler le code générique de cette fonction en tenant compte de la valeur spécifique connue du paramètre spécialisé, pour obtenir le code spécialisé. Le code spécialisé réalise, lorsqu'il est exécuté par le microprocesseur 2, la même fonction que si le code générique était interprété par l'interpréteur 30, mais en exécutant moins d'instructions. Par exemple, si l'on spécialise le paramètre pf1 de la fonction f avec la valeur spécifique « 2 », on obtient un code spécialisé, noté Sf-2,pf2, qui réalise, lorsqu'il est exécuté par le microprocesseur 2, exactement la même fonction f(2,pf2) que celle qui serait réalisée en interprétant le code générique de la fonction f dans le cas où la valeur du paramètre pf1 est égale à « 2 ».

Par la suite, on utilise la notation suivante pour désigner un code spécialisé « Sb-a1,a2, ..,an », où :
- « S » indique qu'il s'agit d'un code spécialisé.
- « b » est l'identifiant du code générique spécialisé. Dans cet exemple, b prend soit la valeur f pour identifier la fonction f soit la valeur g pour identifier la fonction g.
- «a1, a2, ..., an » est la liste des paramètres de la fonction classés dans l'ordre où ils apparaissent en tant qu'arguments de la fonction. Si le paramètre « ai » a été spécialisé, il est remplacé par sa valeur spécifique. S'il n'a pas été spécialisé, il est remplacé par le nom de son paramètre.
Par exemple, la notation Sg-2,3,pg3 désigne le code spécialisé de la fonction g obtenu en spécialisant les paramètres pg1 et pg2 avec, respectivement, les valeurs spécifiques 2 et 3 et dans lequel le paramètre pg3 n'a pas été spécialisé.

Le coût d'exécution du code Sf-2,pf2 est inférieur au coût d'interprétation du code générique de la fonction f(2, pf2). Par exemple, le nombre d'instructions du code Sf-2,pf2 est inférieur au nombre d'instructions exécutées par le microprocesseur 2 lorsque le code générique de cette fonction f(2, pf2) est interprété. En effet, puisque la valeur du paramètre pf1 est connue lors de la compilation du code générique, le générateur 32 traite ce paramètre non plus comme une variable, mais comme une constante, et cela permet d'optimiser le code spécialisé généré. Pour cela, le générateur 32 met en oeuvre au moins l'une des deux optimisations suivantes. La première optimisation consiste à inclure la valeur du paramètre spécialisé directement dans le code spécialisé généré. La deuxième optimisation consiste à supprimer le paramètre spécialisé du code spécialisé.

La suppression d'un paramètre spécialisé est illustrée dans le cas particulier où le code générique comporte une opération : *« Si* pf1 < 3 *Alors* faire l'action 1, *Sinon* faire l'action 2 ». Si la valeur spécifique du paramètre pf1 est égal à 2, le générateur 32 génère un code spécialisé comportant seulement l'opération : « faire action 1 ». Dans ce cas, les instructions de test de la valeur du paramètre pf1 sont omises et le paramètre pf1 n'apparaît plus à cet endroit dans le code spécialisé généré.

Que le paramètre pf1 ait été remplacé par une constante ou tout simplement supprimé du code spécialisé, dans tous les cas, le code spécialisé ne comporte plus d'instruction de lecture de sa valeur à une adresse mémoire située en dehors de la plage continue d'adresses où est enregistré le code spécialisé. A cause de cela, le code spécialisé peut comporter moins d'instructions que le code générique. De plus, les instructions de lecture de la valeur d'un paramètre en mémoire sont des instructions coûteuses en temps d'exécution. Ainsi, par exemple, le code spécialisé généré permet au microprocesseur 2 d'exécuter plus rapidement la fonction f que s'il devait pour cela interpréter le code générique de cette même fonction f.

Le gestionnaire 34 a pour fonction de gérer le flux d'exécution du programme 28. En particulier, comme cela sera décrit plus en détail plus loin, le gestionnaire 34 regroupe les routines suivantes :
- un générateur 35 d'une routine 36 de recherche dans une table 38 de l'adresse d'un code spécialisé,
- une routine 40 de collecte de données statistiques, et
- une routine 42 de gestion de la mémoire 20.

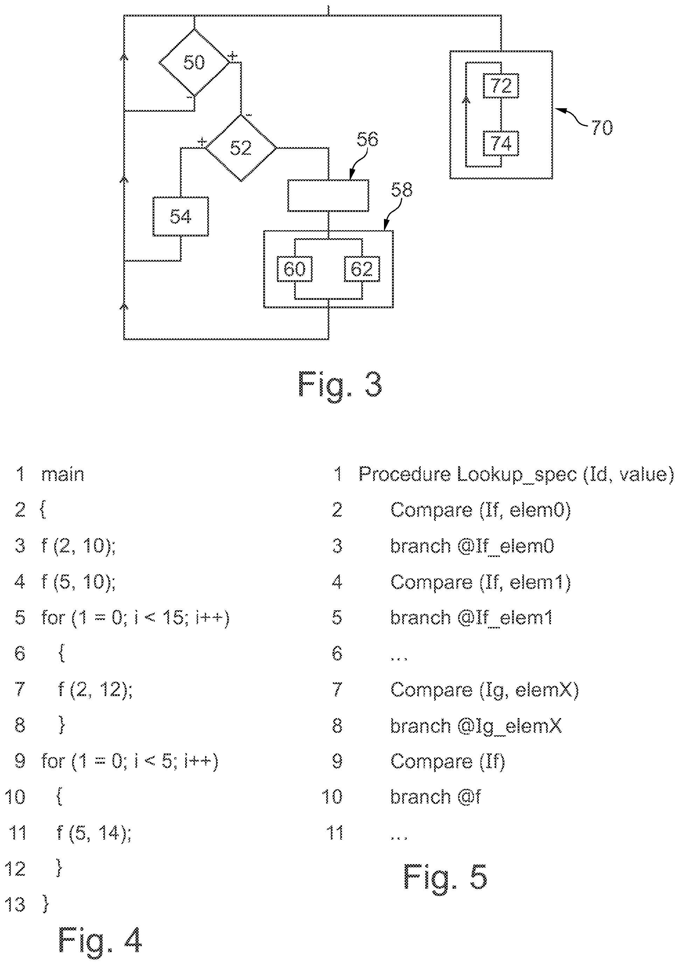

La figure 2 est une illustration schématique de la table 38 et de son contenu sous la forme d'un tableau de colonnes et de lignes. L'homme du métier comprend que cette représentation de la table 38 est une vue de l'esprit qui simplifie les explications et qu'il existe un très grand nombre de possibilités pour enregistrer dans la mémoire 20 une telle table. Par contre, quelle que soit la possibilité choisie pour enregistrer la table 38 dans la mémoire 20, celle-ci permet de reconstruire une représentation de cette table sous la forme d'un tableau comme illustré sur la figure 2. Ainsi, la table 38 correspond à une zone de la mémoire 20 dans laquelle sont enregistrées les informations représentées sous la forme d'un tableau dans la figure 2. Dans un premier temps, les explications sur le fonctionnement de l'unité centrale 1 sont données en utilisant la représentation de la table 38 sous la forme d'un tableau. Ensuite, en référence à la figure 5, un exemple de codage de la routine 36 de recherche dans la table 38 est décrit.

La table 38 comporte ici sept colonnes et une ligne par code spécialisé enregistré dans la mémoire 20. La première colonne comporte l'identifiant du code générique de la fonction spécialisée. Ici, les identifiants des fonctions f et g sont notées, respectivement, If et Ig. Par exemple, l'adresse où a été enregistré le code générique de la fonction est utilisée en tant qu'identifiant de ce code générique. Cet identifiant est indépendant des valeurs des paramètres de cette fonction. La deuxième colonne comporte l'identifiant des paramètres de la fonction qui ont été spécialisés. Ce mode de réalisation est décrit dans le cas particulier où les paramètres spécialisés sont des paramètres explicites de la fonction, c'est-à-dire les arguments de cette fonction. Ce qui est décrit par la suite dans ce cas particulier des paramètres explicites, s'applique à l'identique aux paramètres implicites des fonctions paramétrées. De plus, on suppose que les paramètres sont toujours spécialisés dans l'ordre où ils apparaissent en tant qu'argument dans la fonction. Ainsi, le premier paramètre pf1 est toujours spécialisé avant le paramètre pf2. Dès lors, le générateur 32 peut générer les codes spécialisés Sf-0,pf2 et Sf-0,2. Par contre, le code spécialisé Sf-pf1,0, où seul le paramètre pf2 est spécialisé ne peut pas être généré, puisque le paramètre pf1 apparaît, dans l'ordre des arguments de la fonction f, avant le paramètre pf2. Avec ces hypothèses, le nombre de paramètres spécialisés de la fonction est suffisant pour identifier sans ambiguïté les paramètres spécialisés. Dans le cas présent, le nombre « 1 » est systématiquement ajouté au nombre de paramètres spécialisés. Grâce à cela, le nombre contenu dans la deuxième colonne repère en plus la fin de la ligne.

La troisième colonne contient l'adresse dans la mémoire 22 où est enregistré le code spécialisé. Ici, cette adresse pointe sur la première instruction du code spécialisé enregistré dans la mémoire 22. Pour les adresses, on utilise la même notation que pour les codes spécialisés sauf que la lettre « S » est remplacée par le symbole « @ ». Sur la figure 2, les symboles « V0 » à « V5 » représentent des valeurs spécifiques.

Les quatrième, cinquième, sixième et septième colonnes sont destinées à contenir les valeurs spécifiques des paramètres spécialisés. Dans le cas particulier représenté ici, seuls deux paramètres de la fonction f ont été spécialisés, et seul un paramètre de la fonction g l'a été. Ainsi, les sixième et septième colonnes sont vides. De plus, les cellules de la cinquième colonne associées aux codes spécialisés Sg-V5,pg2,pg3 et Sg-V0,pg2,pg3 sont aussi vides, car la fonction g n'a été spécialisée que pour les valeurs V5 et V0 de son premier paramètre pg1. Sur la figure 2, la ligne ondulée indique que seule une partie du contenu de la table 38 a été représentée. Bien entendu, la table 38 peut contenir des colonnes supplémentaires si plus de quatre paramètres d'une fonction sont spécialisés.

Le procédé d'exécution du programme 28 va maintenant être décrit en référence à la figure 3. Initialement, lors d'une étape 50, le microprocesseur 2 commence par exécuter l'interpréteur 30 L'interprétation consiste à exécuter la routine en langage machine correspondant à chaque instruction bytecode du programme en balayant les unes après les autres les opérations en Bytecode du programme 28. Ainsi, l'étape 50 est réitérée pour l'opération suivante du programme 28. Lors de ces réitérations de l'étape 50, le microprocesseur 2 obtient d'abord les valeurs de chaque paramètre d'une fonction paramétrée avant de l'appeler avec les valeurs ainsi obtenues. L'appel de la fonction se matérialise par un branchement vers l'adresse où est enregistré le code générique de cette fonction. L'adresse vers laquelle l'exécution du programme 28 est déroutée est nécessairement l'adresse du code générique de la fonction, étant donné que le programme 28 ne connaît pas et ne gère pas l'exécution de code spécialisé.

Un branchement est un saut qui déroute l'exécution du programme vers une autre instruction que l'instruction immédiatement suivante dans la mémoire 18 ou 22. Par exemple, pour cela, la valeur du compteur ordinale est changée pour que le pointeur d'instruction du microprocesseur 2 pointe vers une autre instruction que l'instruction suivante.

Dès qu'un branchement vers l'adresse d'une fonction doit être exécuté, lors d'une étape 52, la routine 36 de recherche est exécutée. L'exécution d'un tel branchement correspond à l'appel d'une fonction avec les valeurs des paramètres obtenues lors de l'exécution de l'étape 50.

Lors de l'étape 52, le microprocesseur 2 recherche dans la table 38 s'il existe un code spécialisé apte à réaliser la fonction appelée lorsqu'il est exécuté. Pour cela, le microprocesseur 2 balaie, dans l'ordre, les lignes de la table 38 en partant de la première ligne et en allant vers la dernière ligne. Ainsi, il réalise les opérations suivantes :
a) il sélectionne une ligne de la table 38, puis
b) il lit l'identifiant du code générique contenu dans la première cellule de cette ligne, puis
c) il compare l'identifiant du code générique lu à l'adresse du code générique appelé,
d) si l'identifiant du code générique lu n'est pas égal à l'adresse du code générique appelé, le microprocesseur exécute à nouveau les opérations a) à c), mais pour la ligne suivante de la table 38,
e) si l'identifiant du code générique lu lors de l'opération b) est égal à l'adresse du code générique appelé, le microprocesseur 2 lit l'identifiant des paramètres spécialisés contenus dans la deuxième cellule de cette ligne. Ici, cet identifiant des paramètres spécialisés est un nombre entier positif noté n. Ensuite, le microprocesseur 2 exécute le pseudo-code suivant :

Pour i allant de 4 à n+2 :
Si T[L,i] est différent de la valeur du i-ième paramètre obtenue lors de l'exécution de l'étape 50, Alors sortir de la boucle et exécuter à nouveau les opérations a) à c) pour la ligne suivante de la table 38.
Fin pour.

Dans le pseudo-code ci-dessus, T[L,i] est le contenu de la cellule de la table 38 située à l'intersection de la ligne n° L sélectionnée lors de l'opération a) et de la colonne i. Ici, la numérotation des colonnes de la table 38 commence avec le chiffre 1.

Si la boucle « Pour... Fin pour » du pseudo-code ci-dessus s'exécute jusqu'à la fin, cela signifie que les valeurs spécifiques de tous les paramètres spécialisés sont égaux aux valeurs des paramètres de la fonction appelée. Il existe donc un code spécialisé capable de réaliser exactement la même fonction que le code générique appelé avec les valeurs des paramètres obtenus lors de l'étape 50.

Dans ce cas, lors d'une étape 54, le microprocesseur 2 déclenche l'exécution du code spécialisé dont l'adresse est contenue dans la troisième cellule de la ligne sélectionnée lors de la dernière exécution de l'opération a) de l'étape 52.

On notera que lorsque l'étape 54 est exécutée, il n'est pas nécessaire d'interpréter ou de compiler le code générique de la fonction, ce qui constitue déjà un gain de temps substantiel. De plus, comme expliqué précédemment, le code spécialisé s'exécute aussi plus rapidement que le code générique, car, par exemple, il n'a pas besoin d'aller lire les valeurs de tous les paramètres de la fonction avant de les traiter. Ainsi, l'exécution du code spécialisé accélère substantiellement la réalisation de la fonction par le microprocesseur 2. À la fin de l'exécution du code spécialisé, le microprocesseur retourne à l'étape 50 et reprend l'interprétation du programme 28 à l'opération suivante.

Si à l'issue de l'étape 52, aucun code spécialisé n'a été trouvé dans la table 38, le microprocesseur 2 exécute une étape 56 de collecte de données statistiques. Pour cela la routine 40 est exécutée par le microprocesseur 2. Lors de cette étape 56, le microprocesseur 2 collecte et mémorise des données statistiques sur l'exécution des fonctions paramétrées du programme 28. Ces données statistiques sont destinées à être utilisées pour décider si oui ou non un code spécialisé doit être généré.

L'étape 56 va maintenant être décrite plus en détail dans le cas particulier de la fonction paramétrée f. Toutefois, les explications données dans ce cas particulier se transposent sans difficulté, pour l'homme du métier, à toute autre fonction paramétrée du programme 28 telle que la fonction g.

A chaque fois que l'étape 56 est exécutée pour la fonction f avec les valeurs spécifiques Vx et Vy pour, respectivement, les paramètres pf1 et pf2 de cette fonction, le microprocesseur 2 met à jour la valeur d'un compteur Cf-Vx,pf2 et un compteur Cf-Vx,Vy. Ici, la mise à jour consiste à incrémenter d'un pas prédéterminé les valeurs de ces compteurs. Les valeurs Vx et Vy des paramètres pf1 et pf2 sont celles obtenues lors de la précédente itération de l'étape 50. La notation utilisée ici pour désigner les compteurs est la même que celle utilisée pour désigner les codes spécialisés sauf que la lettre « S » est remplacée par la lettre « C ». Le pas prédéterminé est, par exemple, égal à un.

Ainsi, il existe un compteur Cf-Vx,pf2 associé à chaque valeur Vx différente obtenue lors de l'exécution du programme 28 et pour laquelle il n'existe pas déjà un code spécialisé de la fonction f. Il existe également autant de compteurs Cf-Vx,Vy que de couples de valeurs Vx,Vy différents obtenus lors de l'exécution du programme 28 et pour lesquels il n'existe pas déjà de code spécialisé de la fonction f.

On rappelle aussi ici que par hypothèse, dans ce mode de réalisation, les paramètres sont uniquement spécialisés dans leur ordre d'apparition comme argument de la fonction f. Ainsi, la spécialisation du paramètre pf2 sans spécialiser le paramètre pf1 est rendue impossible. Dès lors, il n'est pas nécessaire de collecter des données statistiques sur les valeurs du paramètre pf2 indépendamment des valeurs du paramètre pf1. Les compteurs Cf-pf1,Vy ne sont donc pas utilisés dans ce mode de réalisation.

Les compteurs Cf-Vx,pf2 et Cf-Vx,Vy sont créés et initialisés à zéro lorsque l'étape 56 est exécutée pour la première fois avec les valeurs Vx et Vy des paramètres pf1 et pf2.

Une fois l'étape 56 terminée, le microprocesseur 2 procède à une étape 58 où il utilise le code générique de la fonction pour réaliser cette fonction et non pas un code spécialisé pré-existant enregistré dans la mémoire 22. Dans ce mode de réalisation, il existe deux alternatives pour réaliser l'étape 58. La première alternative consiste à générer à partir du code générique de la fonction, un code spécialisé qui n'a pas été trouvé dans la table 38 lors de l'étape 52, puis à stocker son adresse dans la table 38 et à exécuter ce code spécialisé. La deuxième alternative consiste à interpréter le code générique de la fonction à l'aide de l'interpréteur 30. La première alternative peut s'avérer plus coûteuse que la deuxième alternative. Par la suite, dans ce mode de réalisation, le coût correspond au temps d'exécution. Par exemple, le temps nécessaire pour réaliser la fonction selon la première alternative peut s'avérer plus long que le temps nécessaire pour réaliser la même fonction, mais en mettant en oeuvre la deuxième alternative. En effet, dans le cas de la première alternative, il faut ajouter au temps d'exécution du code spécialisé, le temps nécessaire pour générer ce code spécialisé. Toutefois, même si le temps d'exécution de la première alternative est plus long que celui de la deuxième alternative, il peut être intéressant de quand même mettre en oeuvre cette première alternative si le code spécialisé généré peut être réutilisé plusieurs fois lors d'exécutions ultérieures de cette même fonction. En effet, lors des exécutions ultérieures du code spécialisé, le temps mis pour générer ce code spécialisé n'est plus à prendre en compte puisqu'il est présent dans la mémoire 22. Cela fait donc, généralement, gagner du temps par rapport à l'interprétation du code générique de la fonction. Ici, pour choisir entre la première et la deuxième alternatives, le gestionnaire 34 est exécuté afin de minimiser autant que possible le coût choisi, c'est-à-dire ici le temps d'exécution du programme 28.

Plus précisément, dans ce mode de réalisation, la première alternative est exécutée dès qu'une condition prédéterminée est vérifiée. La condition est ici le franchissement d'un seuil pré-calculé par la valeur d'un compteur.

Par exemple, chaque compteur incrémenté est comparé à un seuil pré-calculé qui lui est associé. Par la suite, on utilise la même notation pour les seuils pré-calculés que celle définie pour les codes spécialisés, sauf que la lettre « S » est remplacée par la lettre « N ». Ainsi, les seuils associés aux compteurs Cf-Vx,pf2 et Cf-Vx,Vy sont notés, respectivement, Nf-Vx,pf2 et Nf-Vx,Vy.

Ici, cette comparaison est réalisée en commençant d'abord par les compteurs associés au plus grand nombre de paramètres spécialisés et en allant vers les compteurs associés au plus petit nombre de paramètres spécialisés. Ainsi, le microprocesseur 2 compare systématiquement d'abord la valeur du compteur Cf-Vx,Vy au seuil Nf-Vx,Vy, puis la valeur du compteur Cf-Vx,pf2 au seuil Nf-Vx,pf2. Grâce à cela, comme décrit plus loin, cela permet de classer les lignes de la table 38 dans un ordre qui empêche l'apparition de conflits.

Dès que la valeur d'un compteur dépasse le seuil qui lui est associé, le microprocesseur 2 met en oeuvre la première alternative lors d'une opération 60 de génération d'un code spécialisé puis d'exécution de ce code spécialisé. Dans le cas contraire, c'est-à-dire si aucun des compteurs incrémentés n'a dépassé le seuil qui lui est associé, le microprocesseur 2 met en oeuvre, lors d'une opération 62, la deuxième alternative.

Ainsi, lors de l'opération 60, le générateur 32 est exécuté pour générer un code spécialisé avec les valeurs spécifiques des paramètres associés au compteur qui a franchi le seuil qui lui est associé.

Par exemple, si la valeur du compteur Cf-Vx,Vy dépasse le seuil Nf-Vx,Vy, alors le générateur 32 génère le code Sf-Vx,Vy de la fonction f avec les valeurs spécifiques Vx et Vy pour, respectivement, les paramètres pf1 et pf2. Ensuite, seul le compteur Cf-Vx,Vy est supprimé. Dès lors puisque le compteur Cf-Vx,pf2 subsiste, plus tard au cours de l'exécution du programme 28, ce compteur Cf-Vx,pf2 peut dépasser le seuil Nf-Vx,pf2. Si c'est le cas, alors le générateur 32 génère le code spécialisé Sf-Vx,pf2. Par contre, quand le générateur 32 génère le code Sf-Vx,pf2, il supprime à la fois les compteurs Cf-Vx,pf2 et tous les compteurs Cf-Vx,Y, où Y est une valeur spécifique quelconque. En effet, dès que le générateur 32 génère le code spécialisé Sf-Vx,pf2, ensuite il ne doit plus générer un code spécialisé Sf-Vx,Y. Cela est dû au fait que lors de l'étape 52, les lignes de la table 38 sont balayées dans l'ordre en partant de la première ligne vers la dernière ligne. Si le code Sf-Vx,pf2 est généré avant le code Sf-Vx,Vy, l'adresse @f-Vx,pf2 se trouve systématiquement sur une ligne située avant la ligne qui pourrait contenir l'adresse @f-Vx,Vy. Dès lors, quand la fonction f est appelée avec les valeurs Vx et Vy, c'est l'adresse @f-Vx,pf2 qui est systématiquement trouvée en premier et donc le code spécialisé Sf-Vx,pf2 qui est systématiquement exécuté. Ainsi, même si le code Sf-Vx,Vy avait été généré après le code Sf-Vx,pf2, dans ce mode de réalisation, il ne serait quasiment jamais exécuté.

De plus, cette façon de procéder permet de résoudre simplement le conflit qui pourrait survenir si :
- le microprocesseur 2 générait à la fois les codes spécialisés Sf-Vx,pf2 et Sf-Vx,Vy, et
- lors de l'étape 52, le microprocesseur 2 balayait systématiquement toutes les lignes de la table 38.
Dans ce cas, lorsque la fonction f est appelée avec les valeurs Vx et Vy des paramètres pf1 et pf2, le microprocesseur 2 identifierait dans la table 38 deux codes spécialisés Sf-Vx,pf2 et Sf-Vx,Vy susceptibles d'être exécutés pour réaliser la fonction f. Il faudrait donc en plus implémenter une règle permettant au microprocesseur 2 de choisir automatiquement lequel de ces deux codes spécialisés doit être exécuté.

Après avoir généré le code spécialisé, le microprocesseur 2 l'enregistre dans la mémoire 22. Pour cela, le microprocesseur 2 exécute la routine 42 qui réalise les opérations suivantes :
g) La routine 42 examine s'il existe un espace libre de taille suffisante dans la mémoire 22 pour contenir le code spécialisé généré.
h) Dans l'affirmative, le microprocesseur 2 enregistre alors le code spécialisé généré dans une plage continue d'adresses à l'intérieur de cet espace libre.
i) Ensuite, le microprocesseur 2 met à jour la table 38. Plus précisément, le microprocesseur 2 ajoute une nouvelle ligne contenant l'identifiant du code générique, l'identifiant des paramètres spécialisés pour générer ce code spécialisé, l'adresse où débute la plage continue d'adresses où est enregistré ce code spécialisé dans la mémoire 22, et les valeurs spécifiques des paramètres spécialisés. Cette nouvelle ligne est ajoutée juste après la dernière ligne de la table 38.
j) S'il n'existe pas d'espace libre suffisamment grand pour contenir le code spécialisé généré dans la mémoire 22, le microprocesseur 2 commence par supprimer le code spécialisé le plus ancien, c'est-à-dire celui enregistré dans la plage d'adresses qui débute à l'adresse contenue dans la première ligne de la table 38. Cette première ligne de la table 38 est aussi supprimée, de sorte que c'est la seconde ligne de cette table 38 qui devient maintenant la première ligne. Ensuite, il exécute à nouveau les opérations g) à j).

Cette manière de gérer la mémoire 22 permet de minimiser sa taille. De plus, dans ce mode de réalisation, à chaque fois que la table 38 est modifiée, le microprocesseur exécute le générateur 35 pour générer une nouvelle routine 36, écrite dans le langage machine du microprocesseur 2 et l'enregistre à la place de la précédente routine 36. Cette opération est décrite plus en détail en référence à la figure 5.

A la fin de l'opération 60, le microprocesseur 2 exécute le code spécialisé généré pour réaliser la fonction souhaitée.

Lors de l'opération 62, le microprocesseur 2 exécute l'interpréteur 30 pour interpréter le code générique de la fonction. Dans ce cas, les valeurs de tous les paramètres sont traitées comme des variables et ces valeurs doivent donc être lues en mémoire en dehors de la plage d'adresses où est enregistré le code générique avant d'être traité par l'interpréteur 30.

Une fois que l'opération 60 ou 62 a été exécuté, l'étape 58 est terminée et le microprocesseur retourne à l'étape 50 pour exécuter l'opération suivante du programme 28.

En parallèle des étapes précédemment décrites, lors d'une phase 70, le microprocesseur 2 calcule et met à jour dynamiquement chaque seuil associé à un compteur. Plus précisément, le microprocesseur calcule, lors d'une étape 72, chaque seuil à partir d'un rapport Kgen/[Klib-Kdyn]. Dans ce mode de réalisation, chaque coût Kgen, Klib et Kdyn est obtenu uniquement à partir de données concernant la même fonction paramétrée et les mêmes valeurs spécifiques que celles associées au compteur pour lequel ce seuil est calculé. Dès lors, les coûts Kgen, Klib et Kdyn sont spécifiques à chaque compteur. Dans ce mode de réalisation, pour faire ressortir cette spécificité, les coûts Kgen, Klib et Kdyn sont suivis, entre parenthèse, d'un identifiant du compteur auquel ils sont associés.

Le calcul d'un seuil est maintenant décrit dans le cas particulier du seuil Nf-Vx,Vy associé au compteur Cf-Vx,Vy. L'homme du métier sait adapter cette enseignement au calcul des seuils de tous les autres compteurs précédemment décrits. Ici, le seuil Nf-Vx,Vy est calculé à l'aide de la formule suivante : Nf-Vx,Vy = Kgen(f-Vx,Vy) / [Klib(f-Vx,Vy) - Kdyn(f-Vx,Vy)], où :
- Kgen(f-Vx,Vy) est le coût de génération du code spécialisé Sf-Vx,Vy.
- Klib(f-Vx,Vy) est le coût de réalisation de la fonction f sans utiliser le code spécialisé, et
- Kdyn(f-Vx,Vy)] est le coût de réalisation de la fonction f en exécutant le code spécialisé Sf-Vx,Vy.

Ici, le coût est le temps d'exécution. Ainsi, le coût Kgen(f-Vx,Vy) est égal au temps nécessaire pour que le microprocesseur 2 génère le code spécialisé Sf-Vx,Vy. Le coût Klib(f-Vx,Vy) est égal au temps mis par le microprocesseur 2 pour interpréter le code générique de la fonction f avec les valeurs Vx et Vy pour les paramètres pf1 et pf2. Le coût Kdyn(f-Vx,Vy) est le temps mis par le microprocesseur 2 pour exécuter le code spécialisé Sf-Vx,Vy lors de l'étape 54.

L'étape 72 est exécutée une première fois avant la première utilisation, lors de l'étape 58, du seuil Nf-Vx,Vy. Lors de cette première exécution de l'étape 72, les coûts Kgen(f-Vx,Vy), Klib(f-Vx,Vy) et Kdyn(f-Vx,Vy) sont initialisés à partir de valeurs pré-enregistrées dans la mémoire 20.

Ensuite, lors d'une étape 74, le microprocesseur 2 mesure et met à jour les coûts. Par exemple, à chaque fois que le code spécialisé Sf-Vx,Vy est généré, le microprocesseur 2 acquiert une mesure du temps mis pour générer ce code spécialisé et l'enregistre dans la mémoire 20 à la place de la précédente valeur du coût Kgen(f-Vx,Vy). Ici, par exemple, le microprocesseur 2 mesure le temps mis pour exécuter une tâche en déclenchant une minuterie juste avant de débuter l'exécution de cette tâche. Ensuite, il relève la valeur de cette minuterie juste après la fin de l'exécution de cette tâche. La valeur relevée est considérée comme étant le temps mis pour exécuter cette tâche.

De même, à chaque fois que l'opération 62 est exécutée pour la fonction f avec les valeurs Vx, Vy des paramètres pf1 et pf2, le temps mis pour réaliser l'opération 62 est mesuré puis enregistré dans la mémoire 20 à la place de la précédente valeur du coût Klib(f-Vx,Vy).

Enfin, à chaque fois que le code spécialisé Sf-Vx,Vy est exécuté lors de l'étape 54 ou de l'étape 60, le temps mis pour exécuter cette étape est mesuré puis enregistré dans la mémoire 20 à la place de la précédente valeur du coût Kdyn(f-Vx, Vy). Après chaque mise à jour d'un des coûts Kgen(f-Vx,Vy), Klib(f-Vx,Vy) et Kdyn(f-Vx,Vy), l'étape 72 est de nouveau exécutée. On rappelle ici que lors d'une même exécution du programme 28, le code spécialisé Sf-Vx,Vy peut être généré plusieurs fois car, comme décrit précédemment, le code spécialisé peut être effacé de temps en temps de la mémoire 22 pour libérer de la place pour d'autres codes spécialisés.

On remarque que la formule ci-dessus conduit à une valeur du seuil Nf-Vx,Vy strictement inférieure à un si le cumul du temps de génération du code spécialisé Sf-Vx,Vy et du temps d'exécution de ce code spécialisé est strictement inférieur au temps d'interprétation du code générique de la fonction f avec les valeurs Vx, Vy des paramètres pf1 et pf2. Dans ce cas, le code spécialisé Sf-Vx,Vy est généré dès le premier appel de la fonction f avec les valeurs Vx,Vy.

Dans les autres cas, la valeur du seuil Nf-Vx,Vy sera d'autant plus grande qu'il sera difficile d'amortir la génération du code spécialisé Sf-Vx,Vy. Typiquement, amortir la génération d'un code spécialisé est difficile si l'écart entre le coût d'exécution de l'opération 62 et de l'étape 54 pour la même fonction avec les mêmes valeurs de paramètres est petit, ou si le coût Kgen de génération du code spécialisé est grand. Si le temps d'exécution du code spécialisé Sf-Vx,Vy est plus long que le temps d'interprétation du code générique avec les valeurs Vx, Vy des paramètres, alors la valeur du seuil Nf-Vx,Vy est négative. Dans ce cas, le microprocesseur 2 inhibe systématiquement la génération du code spécialisé Sf-Vx,Vy.

Ce qui a été décrit ci-dessus pour le calcul du seuil Nf-Vx,Vy est appliqué à l'identique pour tous les autres seuils en remplaçant dans les explications ci-dessus le symbole « f-Vx,Vy » par l'identifiant de la fonction et des valeurs spécifiques des paramètres spécialisés associés à ce compteur. Ainsi, la valeur du seuil Nf-Vx,pf2 est calculée et mise à jour comme décrit ci-dessus mais en utilisant la formule suivante : Nf-Vx,pf2 = Kgen(f-Vx,pf2)/[Klib(f-Vx,pf2) - Kdyn(f-Vx,pf2)] où Kgen(f-Vx,pf2), Klib(f-Vx,pf2) et Kdyn(f-Vx,pf2) sont les mêmes que respectivement les coûts Kgen(f-Vx,Vy), Klib(f-Vx,Vy) et Kdyn(f-Vx,Vy) mais pour la fonction f avec la valeur Vx pour le paramètre pf1 et une valeur quelconque pour le paramètre pf2.

Le fonctionnement du procédé de la figure 3 est maintenant illustré dans le cas particulier du pseudo-code représenté sur la figure 4. Sur cette figure et sur la figure 5, les numéros à gauche sont les numéros de ligne. On suppose que les seuils Nf-2,pf2 ; Nf-5,pf2 ; Nf-2,10 ; Nf-2,12 ; Nf-5,20 et Nf-5,14 sont tous égaux à deux. Lors du premier appel de la fonction f, à la ligne 3, les compteurs Cf-2,pf2 et Cf-2,10 sont créés puis incrémentés de un. A ce stade, leur valeur est donc égale à un. La fonction f(2, 10) est réalisée en interprétant le code générique de cette fonction.

Lors du deuxième appel à la fonction f, à la ligne 4, les compteurs Cf-5,pf2 et Cf-5,10 sont créés puis incrémentés de un. Ils sont donc maintenant tous les deux égaux à un. Ensuite, la fonction f(5, 10) est réalisée en interprétant le code générique de cette fonction.

Lors de la première itération de la boucle comprise entre les lignes 5 et 8, les compteurs Cf-2,pf2 et Cf-2,12 sont incrémentés de 1 et la fonction f(2, 12) est réalisée en interprétant le code générique de la fonction f.

Lors de la deuxième itération de la boucle comprise entre les lignes 5 à 8, le compteur Cf-2,pf2 est incrémenté et dépasse le seuil Nf-2,pf2. Le code spécialisé Sf-2,pf2 est donc généré et les compteurs Cf-2,10, Cf-2,12 et Cf-2,pf2 sont supprimés. La table 38 est mise à jour pour ajouter la ligne qui contient l'adresse @f-2,pf2 où est enregistré le code spécialisé Sf-2,pf2 dans la mémoire 22. Enfin, la fonction f(2, 12) est réalisée en exécutant le code spécialisé Sf-2,pf2.

A partir de la troisième jusqu'à la quinzième itération de la boucle comprise entre les lignes 5 à 8, c'est le code spécialisé Sf-2,pf2 qui est exécuté pour réaliser la fonction f(2, 12).

Lors de la première itération de la boucle comprise entre les lignes 9 à 12, le compteur Cf-5,pf2 est incrémenté et le compteur Cf-5,14 est créé et incrémenté aussi. A ce stade, la valeur du compteur Cf-5,pf2 est égal à deux et la valeur du compteur Cf-5,14 est égale à un.

Lors de la deuxième itération de la boucle comprise entre les lignes 9 à 12, le compteur Cf-5,pf2 dépasse le seuil Nf-5,pf2. Le code spécialisé Sf-5,pf2 est donc généré et les compteurs Cf-5,pf2, Cf-5,20 et Cf-5,14 sont supprimés. La table 38 est mise à jour pour ajouter la ligne qui contient l'adresse @f-5,pf2. Enfin, la fonction f(5,14) est réalisée en exécutant le code spécialisé Sf-5,pf2. A partir de la troisième jusqu'à la quinzième itération de la boucle comprise entre les lignes 9 à 12, c'est le code spécialisé Sf-5,pf2 qui est exécuté pour réaliser la fonction f(5,14).

La figure 5 représente une partie du code de la routine 36 de recherche généré lors de l'opération 60 du procédé de la figure 3. La routine 36 est générée à partir du contenu mis à jour de la table 38. Dans la figure 5, la routine de recherche 36 s'appelle « Lookup-spec ». Aux lignes 6 et 11, le symbole « ... » indique simplement qu'une partie du code de la routine 36 n'a pas été représentée. Ces parties non représentées se déduisent sans difficulté des explications qui suivent.

La routine 36 présente deux caractéristiques qui accélèrent son exécution par le microprocesseur 2. Premièrement, le contenu de la table 38 est codé en tant que constante à l'intérieur du code de cette routine 36. Ainsi, lors de l'exécution de la routine 36, il n'est pas nécessaire d'aller lire le contenu de la table 38 à des adresses situées en dehors de la plage continue d'adresses où est enregistré le code de cette routine 36. Deuxièmement, plutôt que de renvoyer l'adresse du code spécialisé recherché ou, si aucun code spécialisé n'a été trouvé une valeur par défaut, la routine 36 comporte des branchements qui déclenchent directement l'exécution du code spécialisé trouvé et, sinon, du code générique. Sur la figure 5, ces branchements sont représentés par l'instruction « branch » suivie soit de l'adresse d'un code spécialisé, soit de l'adresse @f qui déclenche la réalisation de la fonction f à l'aide du code générique. Ainsi, on évite d'avoir à stocker l'adresse du code spécialisé trouvé dans une variable, ce qui accélère l'exécution du programme 28.

Dans le pseudo-code représenté dans la figure 5, le symbole « Id » désigne l'identifiant du code générique de la fonction appelée. Le symbole « Value » désigne une variable qui contient les valeurs des différents paramètres de la fonction appelée obtenues lors de l'étape 50. L'instruction « Compare (If, elem0) » compare l'identifiant de la fonction If à l'identifiant Id et les valeurs des paramètres spécialisés contenus dans la constante elem0 aux valeurs correspondantes contenues dans la variable Value. Dans le cas où il y a une différence entre If, elem0 et Id, Value, l'instruction « Compare » se poursuit par l'exécution de l'instruction qui se trouve deux lignes en dessous. Dans le cas contraire, c'est-à-dire si les éléments If et elem0 sont égaux à, respectivement, l'identifiant Id et l'élément Value, alors l'instruction située à la ligne immédiatement en dessous est exécutée. Dans le cas décrit ici, il s'agit de l'instruction « branch @If-elem0 » qui redirige directement l'exécution du programme 28 vers l'adresse @lf-elem0. Par exemple, pour cela, l'adresse @If-elem0 est placée dans le compteur ordinal associé à l'unité arithmétique et logique 4. Les instructions « Compare » et « branch » situées aux lignes suivantes fonctionnent comme décrit précédemment sauf qu'elles ne comparent pas les valeurs Id et Value aux mêmes éléments de la table 38 et ne redirigent pas l'exécution du programme 28 vers la même adresse de code spécialisé.

Si la fonction appelée est la fonction f mais qu'elle est appelée avec des valeurs obtenues pour les paramètres qui ne correspondent à aucun de ceux enregistrés dans la table 38, l'instruction « branch @f » est exécutée. L'exécution de cette instruction redirige l'exécution du programme 28 vers une adresse qui déclenche l'interprétation du code générique de la fonction f. Étant donné que le contenu de la table 38 est codé en tant que constante dans le code de la routine 36, à chaque fois que la table 38 est modifiée, la routine 36 doit de nouveau être générée. Toutefois, étant donné que, dans presque tous les cas, le nombre de fois où la routine 36 est appelée est très supérieur au nombre de fois où la table 38 est modifié, le temps perdu à générer la routine 36 décrite ci-dessus est compensé par le gain de temps dû au fait qu'elle s'exécute plus rapidement que si elle n'avait pas été spécialisée en fonction du contenu de la table 38.

De nombreux autres modes de réalisation du procédé d'exécution décrit ci-dessus sont possibles. Par exemple, le microprocesseur 2 est programmé pour identifier les paramètres implicites et relever leurs valeurs avant ou au cours de l'exécution de l'opération 62. Ensuite, les paramètres implicites ainsi relevés sont traités comme décrit pour les paramètres explicites. En particulier, les étapes 56 et 74 sont également exécutées pour ces paramètres implicites. De plus le générateur 32 est alors adapté pour traiter un paramètre implicite d'une fonction comme une constante et ainsi générer un code spécialisé qui est optimisé en prenant en compte la valeur spécifique de ce paramètre implicite.

En variante, l'interpréteur 30 peut être omis si le programme 28 à exécuter est directement écrit dans le langage machine du microprocesseur 2 et non pas en Bytecode. Dans cette variante, le programme 28 n'est donc plus un code indépendant des spécificités structurelles de l'unité centrale 1. Dans ce cas, le code générique des fonctions f et g est aussi écrit en langage machine et non pas en Bytecode. Toutefois, ces codes génériques, contrairement aux codes spécialisés, comportent pour chaque paramètre des instructions de lecture de la valeur de ce paramètre en dehors de la plage continue d'adresses où est enregistré le code générique de cette fonction. Dans ce cas, le générateur 32 conserve sa fonction d'optimisation du code générique en fonction de la valeur spécifique affecté au paramètre à spécialiser. Ainsi, tout ce qui a été décrit précédemment pour le générateur 32 dans le cas particulier d'un code générique écrit en Bytecode reste inchangé sauf que le générateur 32 compile le code générique écrit en langage machine en un code spécialisé écrit dans le même langage machine. Dans ce cas, le générateur 32 est connu sous le terme anglais de « dynamic optimizer ».

Dans une autre variante, le programme 28 est écrit dans un langage machine d'un autre microprocesseur différent du microprocesseur 2. Dans ce cas, le générateur 32 n'a pas à compiler le programme 28 mais doit traduire les instructions du programme 28 dans le langage machine du microprocesseur 2. Le générateur 32 est alors connu sous l'acronyme DBT (Dynamic binary translator). Comme précédemment, cette variante n'affecte que la fonction de compilateur du générateur 32 mais ne modifie en rien les fonctions d'optimisation qu'il doit réaliser pour générer le code spécialisé.

Ce qui a été décrit précédemment peut être mis en oeuvre avec tout type de langage de programmation. Par exemple, cela peut être mis en oeuvre avec le langage deGoal. En particulier, lors de l'opération 62, le code générique n'est pas nécessairement interprété. Par exemple, en variante, le code générique est un programme obtenu classiquement par un compilateur statique et se trouve dans la mémoire programme 18 avant le démarrage du programme.

Le code spécialisé n'a pas besoin d'être systématiquement généré à la volée lors de l'exécution du programme 28. En variante, lors de l'écriture du programme 28, le programmeur peut repérer des fonctions à spécialiser dans ce programme puis générer, avant même que l'exécution de ce programme commence, les codes spécialisés correspondants à l'aide, par exemple, du générateur 32. Ensuite, lors de l'installation du programme 28 dans l'unité centrale 1, les codes spécialisés générés en avance sont enregistrés dans la mémoire 18 en même temps que le programme 28. Au début de l'exécution du programme 28, le gestionnaire 34 met à jour la table 38 pour y inclure l'adresse des codes spécialisés pré-enregistrés dans la mémoire 18. Ainsi, dès que la fonction est appelée avec une valeur spécifique correspondant à celle utilisée pour générer l'un des codes spécialisés de cette fonction, le générateur 34 déclenche directement l'exécution du code spécialisé pré-enregistré sans qu'il soit nécessaire de faire appel, au moins lors de la première exécution, au générateur 32.

La mémoire 22 n'est pas nécessairement une mémoire volatile. En variante, elle est remplacée par une mémoire non volatile telle qu'une mémoire connue sous l'acronyme NVRAM (Non Volatile Random Access Memory).

L'identifiant d'une fonction dans la table 38 peut aussi être le nom de cette fonction. Dans une autre variante, l'identifiant de la fonction est obtenu en appliquant une fonction de hachage sur le code générique de cette fonction. Par contre, cet identifiant reste le même quelles que soient les valeurs obtenues pour les paramètres de cette fonction.

Si le gestionnaire 34 est programmé pour déclencher la spécialisation d'une seule fonction du programme 28, l'identifiant du code générique dans la table 38 peut être omis et la première colonne supprimée. Par exemple, le gestionnaire est programmé pour autoriser uniquement la spécialisation de la fonction f.

Si le gestionnaire 34 spécialise toujours les n premiers paramètres des fonctions paramétrées, où n est un entier constant supérieur ou égal à un, alors la seconde colonne comportant l'identifiant des paramètres spécialisés de la fonction peut être omise. Ce mode de réalisation simplifie aussi la routine 40 puisqu'il y a alors moins de compteurs à gérer.

Dans une autre variante, le gestionnaire 34 peut spécialiser n'importe quel paramètre d'une fonction et pas nécessairement dans l'ordre des arguments de cette fonction. Ainsi, par exemple, le générateur 32 peut générer à la fois les codes spécialisés Sf-0,pf2 et Sf-pf1,0. L'identifiant des paramètres spécialisés décrits en référence à la figure 2 ne permet pas de distinguer ces deux codes spécialisés. Ainsi, dans ce cas, par exemple, l'identifiant des paramètres spécialisés est remplacé par un autre identifiant de paramètres spécialisés comportant un masque de 3 bits ou plus. Dans ce masque la position du bit identifie le paramètre de la fonction et la valeur « 1 » du bit indique que ce paramètre a été spécialisé tandis que la valeur « 0 » de ce bit indique au contraire que ce paramètre n'a pas été spécialisé. Ainsi, l'identifiant des paramètres spécialisés des codes Sf-0,pf2 et Sf-pf1,0 sont respectivement [1;0] et [0 ;1]. Dans ce cas, la routine 40 doit aussi être modifiée pour collecter les données statistiques sur les valeurs de chacun de ces paramètres. Par exemple, dans le cas de la fonction f, lors de l'étape 56, un compteur supplémentaire Cf-pf1,Vy est utilisé. Ce compteur Cf-pf1,Vy est uniquement associé à la fonction f et également uniquement associé à la valeur Vy du paramètre pf2. Il est incrémenté à chaque fois que le paramètre pf2 prend la valeur Vy. Si la valeur de ce compteur Cf-pf1,Vy dépasse un seuil Nf-pf1,Vy, alors un code spécialisé Sf-pf1,Vy est généré en spécialisant seulement le paramètre pf2 avec la valeur Vy.

Une autre solution consiste à introduire dans la table 38 une colonne par paramètre et à enregistrer la valeur du paramètre utilisé pour générer le code spécialisé d'une fonction dans la seule colonne qui lui est associée. Dans ce cas, l'absence de valeur dans l'une de ces colonnes indique que le paramètre associé à cette colonne n'a pas été spécialisé.

D'autres modes de réalisation de la routine 36 de recherche sont possibles. Par exemple, dans le cas où un code spécialisé est trouvé, la routine 36 renvoie l'adresse de ce code spécialisé plutôt que de rediriger l'exécution du programme directement vers ce code spécialisé. Ensuite, l'adresse renvoyée par la routine 36 est utilisée pour exécuter un branchement vers cette adresse. Si aucun code spécialisé correspondant n'est trouvé dans la table 38, la routine 36 renvoie une valeur par défaut qui indique l'absence de code spécialisé dans la table 38 correspondant à la fonction recherchée. On notera cependant que cette variante suppose l'utilisation d'une variable supplémentaire pour stocker l'adresse, ou la valeur par défaut, renvoyée par la routine 36. Cette variante fonctionne correctement mais s'exécute donc moins rapidement que le mode de réalisation principal précédemment décrit.

Dans un autre mode de réalisation, la routine 36 n'est pas spécialisée en fonction du contenu de la table 38. Ainsi, le générateur 35 peut être omis. En effet, dans ce cas, il n'est pas nécessaire de générer une nouvelle routine 36 en langage machine à chaque fois que le contenu de la table 38 est modifié.

En variante, la routine 36 est modifiée pour parcourir systématiquement toutes les lignes de la table 38 et sélectionner une ou plusieurs lignes contenant des adresses de codes spécialisés capables de réaliser la fonction appelée lorsqu'ils sont exécutés. Dans ce cas, la routine 36 implémente également une règle de choix automatique du code spécialisé à exécuter parmi les différents codes spécialisés sélectionnés. Par exemple, la routine 36 est programmée pour sélectionner systématiquement l'adresse du code spécifique qui comporte le plus grand nombre de paramètres spécialisés. Dans cette variante, même si le code spécifique Sf-Vx,pf2 a été généré en premier, les compteurs Cf-Vx,Vy ne sont pas supprimés lors de l'étape 56 et l'étape 56 est systématiquement exécutée après l'étape 52 pour continuer à mettre à jour ces compteurs. Ainsi, même si le code spécialisé Sf-Vx,pf2 est généré en premier, il reste possible de générer ultérieurement d'autres codes spécialisés pour la même fonction f tels que le code Sf-Vx,Vy par exemple.

La routine 36 de recherche peut également être générée, en langage machine, par un autre microprocesseur puis, par exemple, être enregistrée dans la mémoire 22 avant le début de l'exécution du programme 28.

D'autres coûts d'exécution peuvent être pris en compte pour décider de déclencher la génération d'un code spécialisé. Par exemple, le coût pris en compte peut être la quantité d'une des grandeurs physiques suivantes ou d'une combinaison de ces grandeurs physiques : la consommation électrique, la puissance électrique consommée, le temps d'exécution, la température, le niveau de bruit électrique ou acoustique. Une combinaison souvent utilisée de ces grandeurs physiques est connue sous l'acronyme EDP (« energy-delay product »). L'EDP est égal au produit du temps d'exécution par l'énergie consommée.

De préférence, quelle que soit la grandeur physique choisie, le microprocesseur est équipé d'un capteur qui permet de mesurer la quantité de cette grandeur physique en temps réel. C'est alors ces quantités mesurées par ces capteurs qui sont utilisées pour actualiser les coûts Kgen, Klib et Kdyn.

La phase 70 peut être mise en oeuvre indépendamment de la méthode décrite pour sélectionner le code spécialisé à exécuter et, en particulier, de la structure de la table 38. Par exemple, la phase 70 peut avantageusement être implantée dans un procédé comme celui décrit dans la demande US 2010/0095284.

De nombreuses autres méthodes sont possibles pour mesurer le temps de génération du code spécialisé et d'exécution de ce code spécialisé. Par exemple, toutes les méthodes décrites au chapitre 3.1 de l'article suivant sont utilisables :
- M. Arnold et Al, « Adaptive optimization in the jalapeño JVM », ACM SIGPLAN Notices, vol. 46, n°4, pp 65-83, 2011.

Une autre méthode possible est décrite dans l'article suivant :
- D. Buytaert et Al, « Using HPM-Sampling to drive dynamic compilation », Proceeding of the conférence on object-oriented programming systems, languages and applications, OOPSLA, pp 553-567, 2007.

Enfin, une autre méthode pour mesurer le temps de génération du code spécialisé et de réalisation de la fonction à partir du code générique peut être trouvée dans l'article suivant :
- S-W. Lee et Al, « Enhanced hot spot détection heuristics for embedded java just-in-time compilers », Proceedings of the ACM SIGPLAN Conférence on languages, compilers and tools for embedded systems (LCTES), pp 13-22, 2008.

Les seuils précédemment décrits peuvent également être calculés différemment. Par exemple, le seuil Nf-Vx,Vy est calculé à l'aide de la formule suivante : Nf-Vx,Vy = v(Kgen(f-Vx,Vy)/[Klib(f-Vx,Vy-Kdyn(fVx,Vy)], où v(...) est une fonction continûment croissante comme par exemple une fonction exponentielle ou logarithmique ou un simple produit par une constante numérique.

Dans un autre mode de réalisation, tous les compteurs associés à une même fonction f sont également associés au même seuil, noté Nf. Ainsi, quelle que soit la valeur des paramètres spécialisés de la fonction f, le seuil Nf utilisé est le même. Par contre, les compteurs associés aux différentes fonctions n'ont généralement pas les mêmes seuils. Ainsi, généralement, le seuil Nf est différent du seuil Ng associé à la fonction g. Dans ce mode de réalisation, le seuil est donc commun à tous les compteurs qui sont associés à la même fonction mais indépendant des valeurs spécifiques des paramètres de cette fonction.

De préférence, le seuil Nf est calculé à l'aide de la formule Nf = Kgen(f)/ [Klib(f) - Kdyn(f)], où Kgen(f), Klib(f) et Kdyn(f) sont les mêmes coûts que, respectivement, les coûts Kgen(f-Vx,Vy), Klib(f-Vx,Vy) et Kdyn(f-Vx,Vy) mais calculés indépendamment des valeurs des paramètres pf1 et pf2. Par exemple, Kgen(f), Klib(f) et Kdyn(f) sont mesurés à chaque fois que, respectivement :
- un code spécialisé de la fonction f est généré,
- le code générique de la fonction f est utilisé pour réaliser cette fonction,
- un code spécialisé de la fonction f est exécuté.

Dans un autre mode de réalisation, les coûts ne sont pas mis à jour dynamiquement ni mesuré. Dans ce cas, l'étape 72 est exécutée une seule fois par le microprocesseur 2 pour initialiser les valeurs des différents seuils utilisés.

La phase 70 peut aussi être omise. Par exemple, les différents seuils associés aux différents compteurs sont des constantes pré-enregistrées à l'avance dans la mémoire 20.

Dans un autre mode de réalisation, à chaque fois qu'une fonction paramétrée est appelée, un code spécialisé correspondant est généré puis exécuté. Dans ce mode de réalisation, la décision de générer un code spécialisé est systématiquement prise. Le procédé de la figure 3 peut alors être simplifié, en particulier, la phase 70 et l'opération 62 sont omises et l'opération 60 est simplifiée. La routine 40 de collecte de données statistiques peut être omise dans ce cas.

D'autres méthodes que celles précédemment décrites peuvent être utilisées pour décider s'il faut déclencher ou non la génération d'un code spécialisé. Par exemple, en variante, les méthodes décrites dans les articles suivants sont utilisables:
- E. Duesterwald et Al, « Software profiling for hot path prédiction : Less is more », International Conférence on Architectural Support for Programming Languages and Operating Systems, ASPLOS, pp 202-211, 2000,
- D. Buytaert et Al, « Using HPM-sampling to drive dynamic compilation », Proceeding of the conférence on Object-Oriented Programming Systems, Languages and Applications, OOPSLA, pp 553-567, 2007,
- M. Arnold et Al. « Adaptive optimisation in the jalapeño JVM », ACM SIGPLAN Notices, vol. 46, n°4, pp 65-83, 2011.

## Revendications

1. Procédé d'exécution d'un programme d'ordinateur comportant au moins une fonction paramétrée susceptible d'être exécutée une ou plusieurs fois au cours de l'exécution du programme, cette fonction comportant au moins un paramètre dont la valeur est obtenue au moment où la fonction est appelée pour être exécutée par un microprocesseur ou durant son exécution par le microprocesseur, ce procédé comportant :
a) la fourniture d'un code générique de la fonction dans lequel chaque paramètre de la fonction est codé comme une variable de sorte que ce code générique ne contient pas en lui-même la valeur de ce paramètre mais contient une opération de lecture de sa valeur à une adresse spécifiée par le code générique,
b) l'enregistrement (60) dans une mémoire de plusieurs codes spécialisés de cette fonction, écrits dans le langage machine du microprocesseur, chaque code spécialisé réalisant, lorsqu'il est exécuté par le microprocesseur, la même fonction que le code générique mais dans le cas particulier où au moins un paramètre de la fonction est spécialisé, la spécialisation d'un paramètre de la fonction consistant à affecter une valeur spécifique à ce paramètre puis à traiter ce paramètre non plus comme une variable mais comme une constante de sorte que le code spécialisé ne comporte aucune opération de lecture de sa valeur à une adresse située en dehors de la plage continue d'adresses où est enregistré ce code spécialisé, les codes spécialisés enregistrés différant les uns des autres par la valeur affectée au même paramètre spécialisé ou par le paramètre qui a été spécialisé,
c) pour chaque code spécialisé, la mémorisation (60), dans une table, d'une adresse où est enregistré ce code spécialisé dans la mémoire,
d) lors de l'exécution du programme, le microprocesseur obtient (50) une valeur numérique pour chaque paramètre de la fonction, puis
e) le microprocesseur recherche (52), dans la table, l'adresse d'un code spécialisé apte, lorsqu'il est exécuté par le microprocesseur, à réaliser la fonction paramétrée avec les valeurs obtenues lors de l'étape d), puis
f) si une telle adresse existe dans la table, le microprocesseur réalise la fonction en exécutant directement (54) le code spécialisé enregistré dans la mémoire à cette adresse sans utiliser le code générique, et sinon
g) le microprocesseur réalise (58) cette fonction en utilisant son code générique, **caractérisé en ce que** :
- l'étape c) comporte également la mémorisation (60), associée à chaque adresse d'un code spécialisé, de la valeur de chacun de ses paramètres spécialisés, et
- l'étape e) comporte pour une adresse enregistrée dans la table:
e1) la comparaison (52) de la valeur de chaque paramètre spécialisé, associé dans la table à cette adresse, à la valeur du même paramètre obtenue lors de l'étape d) puis,
e2) si lors de l'opération e1), pour chaque paramètre spécialisé sa valeur mémorisée dans la table correspond à la valeur de ce paramètre obtenue lors de l'étape d), alors le microprocesseur sélectionne (52) cette adresse en tant qu'adresse du code spécialisé apte à réaliser la fonction paramétrée avec les valeurs obtenues lors de l'étape d) et, sinon, le microprocesseur sélectionne une adresse suivante dans la table pour laquelle les opérations e1) et e2) n'ont pas encore été réalisées puis réitère les opérations e1) et e2) pour cette adresse suivante, et
- à chaque fois que l'adresse d'un code spécialisé doit être modifiée, supprimée ou ajoutée dans la table, le microprocesseur génère (60) et enregistre dans la mémoire une routine de recherche écrite dans le langage machine du microprocesseur, cette routine de recherche étant apte, lorsqu'elle est exécutée par le microprocesseur, à réaliser les opérations e1) et e2), cette routine de recherche contenant, codé en tant que constante, chaque adresse et chaque valeur de paramètres spécialisés mémorisés dans la table de sorte que la routine de recherche ne comporte aucune opération de lecture de la valeur d'un paramètre spécialisé ou de l'adresse d'un code spécialisé en dehors de la plage continue d'adresses où est enregistrée cette routine de recherche, et
- à chaque fois que l'étape e) est exécutée, le microprocesseur exécute directement cette routine de recherche enregistrée dans sa mémoire.

2. Procédé selon la revendication 1, dans lequel :
- la génération (60) de la routine de recherche comporte pour chaque adresse d'un code spécialisé contenue dans la table, la génération d'un jeu d'instructions qui code un branchement conditionnel direct vers cette adresse du code spécialisé, et
- lorsque ce branchement conditionnel est exécuté par le microprocesseur, seulement si la valeur de chaque paramètre spécialisé associé dans la table à cette adresse est égale à la valeur du même paramètre obtenue lors de l'étape d), alors le microprocesseur remplace la valeur actuelle d'un compteur ordinal du microprocesseur par cette adresse de sorte que la prochaine instruction exécutée par le microprocesseur est directement la première instruction de ce code spécialisé.

3. Procédé selon l'une quelconque des revendications précédentes, dans lequel :
- le procédé comporte l'exécution (56) d'une routine de collecte de données statistiques qui incrémente un compteur, associé à la fois à la fonction paramétrée, à un paramètre de cette fonction paramétrée et à une valeur prédéterminée de ce paramètre, à chaque fois qu'une valeur de ce paramètre de la fonction paramétrée obtenue lors de l'étape d) est égale à cette valeur prédéterminée et, en alternance, l'absence d'incrémentation de ce compteur si la valeur obtenue lors de l'étape d) pour ce paramètre est différente de cette valeur prédéterminée,
- en réponse au franchissement d'un seuil pré-calculé par ce compteur, la génération (60), lors d'une étape h), d'un nouveau code spécialisé de la fonction paramétrée en spécialisant le paramètre associé à ce compteur avec la valeur prédéterminée associée à ce compteur, puis l'enregistrement de ce nouveau code spécialisé dans la mémoire et la mise à jour de la table pour y incorporer l'adresse où est enregistré ce nouveau code spécialisé et la valeur du paramètre spécialisé.

4. Procédé selon la revendication 3, dans lequel le procédé comporte le calcul du seuil pré-calculé à partir d'un rapport Kgen/[Klib-Kdyn], où :
- Kgen est un coût pour exécuter l'étape h),
- Kdyn est un coût pour exécuter l'étape f),
- Klib est un coût pour exécuter l'étape g), et
les coûts Kgen, Kdyn et Klib sont chacun des quantités respectives, pré-enregistrées ou mesurées au préalable, d'une même grandeur physique ou d'une même combinaison de grandeurs physiques qui varie selon que le microprocesseur exécute l'étape f) ou l'étape g).

5. Procédé selon l'une quelconque des revendications précédentes, dans lequel, lorsque la mémoire est pleine, à chaque fois qu'un nouveau code spécialisé doit être enregistré dans la mémoire, le microprocesseur enregistre ce nouveau code spécialisé à la place du code spécialisé le plus ancien contenu dans cette mémoire.

6. Procédé selon les revendications 2 et 3 prises ensemble, dans lequel seulement si aucun des branchements conditionnels directs de la routine de recherche n'a déclenché l'exécution d'un code spécialisé, alors la routine de collecte de données statistiques est exécutée.

7. Procédé selon l'une quelconque des revendications précédentes, dans lequel :
- les étapes a) à g) sont exécutées, en alternance, pour, respectivement, une première puis une seconde fonctions paramétrées dont les codes génériques sont différents, et
- l'étape c) comporte en plus la mémorisation (60) dans la table d'un identifiant du code générique de la fonction qui a été spécialisée associé à l'adresse de ce code spécialisé,
- lors de l'étape d), le microprocesseur obtient aussi l'identifiant du code générique de la fonction à exécuter,
- lors de l'opération e1), le microprocesseur compare l'identifiant, associé dans la table à l'adresse du code spécialisé, à l'identifiant obtenu lors de l'étape d), et
- lors de l'opération e2), seulement si lors de l'opération e1), l'identifiant associé à l'adresse du code spécialisé correspond à l'identifiant obtenu lors de l'étape d) et seulement si la valeur de chaque paramètre spécialisé associé dans la table à cette adresse de code spécialisé correspond à la valeur obtenue lors de l'étape d), alors le microprocesseur sélectionne cette adresse en tant qu'adresse du code spécialisé apte à réaliser la fonction paramétrée avec les valeurs obtenues lors de l'étape d).

8. Procédé selon l'une quelconque des revendications précédentes, dans lequel :
- les étapes a) à g) sont exécutées pour une fonction paramétrée comportant au moins un premier et un second paramètres dont les valeurs sont obtenues au moment où cette fonction est appelée pour être exécutée par le microprocesseur ou durant son exécution par le microprocesseur,
- l'étape b) comporte :
- l'enregistrement d'un premier code spécialisé obtenu en spécialisant le premier paramètre de la fonction avec une première valeur spécifique, et
- l'enregistrement d'un second code spécialisé obtenu en spécialisant le second paramètre de la fonction avec une seconde valeur spécifique,
- l'étape c) comporte en plus la mémorisation dans la table, associée à chaque adresse d'un code spécialisé de cette table, d'un identifiant du ou des paramètres spécialisés pour obtenir le code spécialisé enregistré à cette adresse,
- lors de l'opération e1), le microprocesseur identifie le ou les paramètres de la fonction qui ont été spécialisés pour générer le code spécialisé enregistré à cette adresse à l'aide de l'identifiant du ou des paramètres spécialisés associés, dans la table, à cette adresse, puis le microprocesseur compare seulement les valeurs, obtenues lors de l'étape d), des paramètres de la fonction ainsi identifiés aux valeurs de ces mêmes paramètres associés dans la table à cette adresse.

9. Support d'enregistrement d'informations, **caractérisé en ce qu'**il comporte des instructions pour l'exécution d'un procédé conforme à l'une quelconque des revendications précédentes, lorsque ces instructions sont exécutées par un microprocesseur.

10. Programme d'ordinateur, **caractérisé en ce qu'**il comporte des instructions pour l'exécution d'un procédé conforme à l'une quelconque des revendications 1 à 8, lorsque ces instructions sont exécutées par un microprocesseur.

11. Unité centrale électronique pour exécuter un programme d'ordinateur comportant au moins une fonction paramétrée susceptible d'être exécutée une ou plusieurs fois au cours de l'exécution du programme, cette fonction comportant au moins un paramètre dont la valeur est obtenue au moment où la fonction est appelée pour être exécutée par un microprocesseur ou durant son exécution par le microprocesseur, cette unité centrale comportant :
- une mémoire ou un ensemble de mémoires (18, 20, 22) contenant :
• un code générique de la fonction dans lequel chaque paramètre de la fonction est codé comme une variable de sorte que ce code générique ne contient pas en lui-même la valeur de ce paramètre mais contient une opération de lecture de sa valeur à une adresse spécifiée par le code générique,
• plusieurs codes spécialisés de cette fonction, écrits dans le langage machine du microprocesseur, chaque code spécialisé réalisant, lorsqu'il est exécuté par le microprocesseur, la même fonction que le code générique mais dans le cas particulier où au moins un paramètre de la fonction est spécialisé, la spécialisation d'un paramètre de la fonction consistant à affecter une valeur spécifique à ce paramètre puis à traiter ce paramètre non plus comme une variable mais comme une constante de sorte que le code spécialisé ne comporte aucune opération de lecture de sa valeur à une adresse située en dehors de la plage continue d'adresses où est enregistré ce code spécialisé, les codes spécialisés enregistrés différant les uns des autres par la valeur affectée au même paramètre spécialisé ou par le paramètre qui a été spécialisé,
- un microprocesseur (2) programmé pour exécuter les étapes suivantes :
c) pour chaque code spécialisé, la mémorisation, dans une table, d'une adresse où est enregistré ce code spécialisé dans la mémoire,
d) lors de l'exécution du programme, le microprocesseur obtient une valeur numérique pour chaque paramètre de la fonction, puis
e) le microprocesseur recherche, dans la table, l'adresse d'un code spécialisé apte, lorsqu'il est exécuté par le microprocesseur, à réaliser la fonction paramétrée avec les valeurs obtenues lors de l'étape d), puis
f) si une telle adresse existe dans la table, le microprocesseur réalise la fonction en exécutant directement le code spécialisé enregistré dans la mémoire à cette adresse sans utiliser le code générique, et sinon
g) le microprocesseur réalise cette fonction en utilisant son code générique, **caractérisé en ce que** le microprocesseur (2) est également programmé de manière à ce que :
- l'étape c) comporte également la mémorisation, associée à chaque adresse d'un code spécialisé, de la valeur de chacun de ses paramètres spécialisés, et
- l'étape e) comporte pour une adresse enregistrée dans la table:
e1) la comparaison de la valeur de chaque paramètre spécialisé, associé dans la table à cette adresse, à la valeur du même paramètre obtenue lors de l'étape d), puis
e2) si lors de l'opération e1), pour chaque paramètre spécialisé sa valeur mémorisée dans la table correspond à la valeur de ce paramètre obtenue lors de l'étape d), alors le microprocesseur sélectionne cette adresse en tant qu'adresse du code spécialisé apte à réaliser la fonction paramétrée avec les valeurs obtenues lors de l'étape d) et, sinon, le microprocesseur sélectionne une adresse suivante dans la table pour laquelle les opérations e1) et e2) n'ont pas encore été réalisées puis réitère les opérations e1) et e2) pour cette adresse suivante, et
- à chaque fois que l'adresse d'un code spécialisé doit être modifiée, supprimée ou ajoutée dans la table, le microprocesseur génère et enregistre dans la mémoire une routine de recherche écrite dans le langage machine du microprocesseur, cette routine de recherche étant apte, lorsqu'elle est exécutée par le microprocesseur, à réaliser les opérations e1) et e2), cette routine de recherche contenant, codé en tant que constante, chaque adresse et chaque valeur de paramètres spécialisés mémorisés dans la table de sorte que la routine de recherche ne comporte aucune opération de lecture de la valeur d'un paramètre spécialisé ou de l'adresse d'un code spécialisé en dehors de la plage continue d'adresses où est enregistrée cette routine de recherche, et
- à chaque fois que l'étape e) est exécutée, le microprocesseur exécute directement cette routine de recherche enregistrée dans sa mémoire.

## Patentansprüche

1. Verfahren zur Ausführung eines Computerprogramms mit mindestens einer parametrisierten Funktion, die geeignet ist, ein oder mehrmals während der Ausführung des Programms ausgeführt zu werden, wobei diese Funktion mindestens einen Parameter umfasst, dessen Wert zu dem Zeitpunkt, zu dem die Funktion aufgerufen wird, um von einem Mikroprozessor ausgeführt zu werden, oder während ihrer Ausführung durch den Mikroprozessor erhalten wird, wobei dieses Verfahren umfasst:
a) das Bereitstellen eines generischen Codes der Funktion, in dem jeder Parameter der Funktion als Variable codiert ist, so dass dieser generische Code nicht selbst den Wert dieses Parameters enthält, sondern eine Operation zum Lesen von dessen Wert an einer vom generischen Code spezifizierten Adresse enthält,
b) das Speichern (60) mehrerer spezialisierter Codes dieser Funktion, die in der Maschinensprache des Mikroprozessors geschrieben sind, in einem Speicher, wobei jeder spezialisierte Code, wenn er vom Mikroprozessor ausgeführt wird, die gleiche Funktion wie der generische Code realisiert, aber in dem besonderen Fall, in dem mindestens ein Parameter der Funktion spezialisiert ist, wobei die Spezialisierung eines Parameters der Funktion darin besteht, diesem Parameter einen spezifischen Wert zuzuweisen und diesen Parameter dann nicht mehr als Variable, sondern als Konstante zu behandeln, so dass der spezialisierte Code keinen Vorgang zum Lesen seines Werts an einer Adresse außerhalb des kontinuierlichen Adressenbereichs, in dem dieser spezialisierte Code gespeichert ist, umfasst, die gespeicherten spezialisierten Codes sich voneinander durch den Wert, der demselben spezialisierten Parameter zugewiesen ist, oder durch den Parameter, der spezialisiert wurde, unterscheiden,
c) für jeden spezialisierten Code das Speichern (60) einer Adresse, an der dieser spezialisierte Code in dem Speicher gespeichert ist, in einer Tabelle,
d) bei der Ausführung des Programms erhält (50) der Mikroprozessor einen numerischen Wert für jeden Parameter der Funktion, dann
e) sucht (52) der Mikroprozessor in der Tabelle die Adresse eines spezialisierten Codes, der geeignet ist, wenn er vom Mikroprozessor ausgeführt wird, die parametrisierte Funktion mit den im Schritt d) erhaltenen Werten zu realisieren, dann
f) realisiert der Mikroprozessor, wenn eine solche Adresse in der Tabelle vorkommt, die Funktion, indem er den im Speicher an dieser Adresse gespeicherten spezialisierten Code direkt ausführt (54), ohne den generischen Code zu verwenden, und anderenfalls
g) realisiert (58) der Mikroprozessor diese Funktion unter Verwendung ihres generischen Codes, **dadurch gekennzeichnet, dass**:
- der Schritt c) auch das Speichern (60), jeder Adresse eines spezialisierten Codes zugeordnet, des Werts jedes seiner spezialisierten Parameter umfasst und
- der Schritt e) für eine in der Tabelle gespeicherte Adresse umfasst:
e1) das Vergleichen (52) des Werts jedes spezialisierten Parameters, der in der Tabelle dieser Adresse zugeordnet ist, mit dem Wert desselben Parameters, der im Schritt d) erhalten wurde, dann
e2) wenn bei der Operation e1) für jeden spezialisierten Parameter dessen in der Tabelle gespeicherter Wert dem in Schritt d) erhaltenen Wert dieses Parameters entspricht, wählt der Mikroprozessor (52) diese Adresse als Adresse des spezialisierten Codes, der geeignet ist, die parametrisierte Funktion mit den im Schritt d) erhaltenen Werten zu realisieren, und wählt der Mikroprozessor andernfalls eine folgende Adresse in der Tabelle, für welche die Operationen e1) und e2) noch nicht ausgeführt wurden, und wiederholt dann die Operationen e1) und e2) für diese folgende Adresse, und
- der Mikroprozessor jedes Mal, wenn die Adresse eines spezialisierten Codes in der Tabelle geändert, gelöscht oder hinzugefügt werden muss, eine in der Maschinensprache des Mikroprozessors geschriebene Suchroutine generiert (60) und im Speicher speichert, wobei diese Suchroutine geeignet ist, wenn sie vom Mikroprozessor ausgeführt wird, die Operationen e1) und e2) zu realisieren, wobei diese Suchroutine, als Konstante codiert, jede Adresse und jeden Wert von spezialisierten Parametern enthält, die in der Tabelle gespeichert sind, so dass die Suchroutine keine Operation zum Lesen des Werts eines spezialisierten Parameters oder der Adresse eines spezialisierten Codes außerhalb des kontinuierlichen Adressbereichs, in dem diese Suchroutine gespeichert ist, enthält, und
- der Mikroprozessor jedes Mal, wenn der Schritt e) ausgeführt wird, diese in seinem Speicher gespeicherte Suchroutine direkt ausführt.

2. Verfahren nach Anspruch 1, bei dem:
- das Generieren (60) der Suchroutine für jede in der Tabelle enthaltene Adresse eines spezialisierten Codes das Generieren eines Anweisungssatzes umfasst, der eine direkte bedingte Verzweigung zu dieser Adresse des spezialisierten Codes codiert, und
- der Mikroprozessor, wenn diese bedingte Verzweigung vom Mikroprozessor ausgeführt wird, nur dann, wenn der Wert jedes spezialisierten Parameters, der in der Tabelle dieser Adresse zugeordnet ist, gleich dem in Schritt d) erhaltenen Wert desselben Parameters ist, den aktuellen Wert eines Programmschrittzählers des Mikroprozessors durch diese Adresse ersetzt, so dass die nächste vom Mikroprozessor ausgeführte Anweisung direkt die erste Anweisung dieses spezialisierten Codes ist.

3. Verfahren nach einem der vorhergehenden Ansprüche, bei dem:
- das Verfahren die Ausführung (56) einer Routine zum Sammeln statistischer Daten umfasst, die einen Zähler, der gleichzeitig der parametrisierten Funktion, einem Parameter dieser parametrisierten Funktion und einem vorgegebenen Wert dieses Parameters zugeordnet ist, jedes Mal dann inkrementiert, wenn ein im Schritt d) erhaltener Wert dieses Parameters der parametrisierten Funktion gleich diesem vorgegebenen Wert ist, und im Wechsel das Nichtinkrementieren dieses Zählers, wenn der im Schritt d) für diesen Parameter erhaltene Wert von diesem vorgegebenen Wert verschieden ist,
- als Antwort auf das Überschreiten einer von diesem Zähler vorausberechneten Schwelle das Generieren (60) eines neuen spezialisierten Codes der parametrisierten Funktion in einem Schritt h), indem der diesem Zähler zugeordnete Parameter mit dem diesem Zähler zugeordneten vorgegebenen Wert spezialisiert wird, dann das Speichern dieses neuen spezialisierten Codes im Speicher und das Aktualisieren der Tabelle, um die Adresse, an der dieser neue spezialisierte Code und der Wert des spezialisierten Parameters gespeichert sind, darin aufzunehmen.

4. Verfahren nach Anspruch 3, bei dem das Verfahren die Berechnung der vorausberechneten Schwelle ausgehend von einem Verhältnis Kgen/[Klib-Kdyn] umfasst, worin:
- Kgen die Kosten zum Ausführen des Schritts h) ist,
- Kdyn die Kosten zum Ausführen des Schritts f) ist,
- Klib die Kosten zum Ausführen des Schritts g) ist und
die Kosten Kgen, Kdyn und Klib jeweils vorgespeicherte oder im Voraus gemessene Mengen derselben physikalischen Größe oder derselben Kombination physikalischer Größen sind, die je nachdem, wie der Mikroprozessor den Schritt f) oder den Schritt g) ausführt, variiert.

5. Verfahren nach einem der vorhergehenden Ansprüche, bei dem der Mikroprozessor, wenn der Speicher voll ist, jedes Mal dann, wenn ein neuer spezialisierter Code im Speicher gespeichert werden muss, diesen neuen spezialisierten Code anstelle des ältesten in diesem Speicher enthaltenen spezialisierten Codes speichert.

6. Verfahren nach den Ansprüchen 2 und 3 zusammengenommen, bei dem nur dann, wenn keine der direkten bedingten Verzweigungen der Suchroutine die Ausführung eines spezialisierten Codes ausgelöst hat, die Routine zum Sammeln statistischer Daten ausgeführt wird.

7. Verfahren nach einem der vorhergehenden Ansprüche, bei dem:
- die Schritte a) bis g) im Wechsel für jeweils eine erste und dann eine zweite parametrisierte Funktion ausgeführt werden, deren generische Codes verschieden sind, und
- der Schritt c) zusätzlich das Speichern (60) einer der Adresse dieses spezialisierten Codes zugeordneten Kennung des generischen Codes der Funktion, die spezialisiert wurde, in der Tabelle umfasst,
- der Mikroprozessor im Schritt d) auch die Kennung des generischen Codes der auszuführenden Funktion erhält,
- der Mikroprozessor bei der Operation e1) die Kennung, die in der Tabelle der Adresse des spezialisierten Codes zugeordnet ist, mit der im Schritt d) erhaltenen Kennung vergleicht und
- der Mikroprozessor bei der Operation e2) nur dann, wenn bei der Operation e1) die der Adresse des spezialisierten Codes zugeordnete Kennung der beim Schritt d) erhaltenen Kennung entspricht, und nur dann, wenn der Wert jedes spezialisierten Parameters, der in der Tabelle dieser Adresse des spezialisierte Codes zugeordnet ist, dem im Schritt d) erhaltenen Wert entspricht, diese Adresse als Adresse des spezialisierten Codes wählt, der geeignet ist, die parametrisierte Funktion mit den im Schritt d) erhaltenen Werten zu realisieren.

8. Verfahren nach einem der vorhergehenden Ansprüche, bei dem:
- die Schritte a) bis g) für eine parametrisierte Funktion ausgeführt werden, die mindestens einen ersten und einen zweiten Parameter umfasst, deren Werte zu dem Zeitpunkt, zu dem diese Funktion aufgerufen wird, um von dem Mikroprozessor ausgeführt zu werden, oder während ihrer Ausführung durch den Mikroprozessor erhalten werden,
- der Schritt b) umfasst:
- das Speichern eines ersten spezialisierten Codes, der erhalten wird, indem der erste Parameter der Funktion mit einem ersten spezifischen Wert spezialisiert wird, und
- das Speichern eines zweiten spezialisierten Codes, der erhalten wird, indem der zweite Parameter der Funktion mit einem zweiten spezifischen Wert spezialisiert wird,
- der Schritt c) zusätzlich das Speichern in der Tabelle, jeder Adresse eines spezialisierten Codes dieser Tabelle zugeordnet, einer Kennung des oder der spezialisierten Parameter umfasst, um den an dieser Adresse gespeicherten spezialisierten Code zu erhalten,
- der Mikroprozessor bei der Operation e1) den oder die Parameter der Funktion, die spezialisiert wurden, identifiziert, um den an dieser Adresse gespeicherten spezialisierten Code mithilfe der Kennung des oder der spezialisierten Parameter zu generieren, die in der Tabelle dieser Adresse zugeordnet sind, und der Mikroprozessor dann nur die im Schritt d) erhaltenen Werte der so identifizierten Parameter der Funktion mit den Werten derselben Parameter, die in der Tabelle dieser Adresse zugeordnet sind, vergleicht.

9. Datenspeichermedium, **dadurch gekennzeichnet, dass** es Anweisungen zur Ausführung eines Verfahrens nach einem der vorhergehenden Ansprüche, wenn diese Anweisungen von einem Mikroprozessor ausgeführt werden, umfasst.

10. Computerprogramm, **dadurch gekennzeichnet, dass** es Anweisungen zur Ausführung eines Verfahrens nach einem der Ansprüche 1 bis 8, wenn diese Anweisungen von einem Mikroprozessor ausgeführt werden, umfasst.

11. Elektronische Zentraleinheit zur Ausführung eines Computerprogramms mit mindestens einer parametrisierten Funktion, die geeignet ist, ein oder mehrmals während der Ausführung des Programms ausgeführt zu werden, wobei diese Funktion mindestens einen Parameter umfasst, dessen Wert zu dem Zeitpunkt, zu dem die Funktion aufgerufen wird, um von einem Mikroprozessor ausgeführt zu werden, oder während ihrer Ausführung durch den Mikroprozessor erhalten wird, wobei diese Zentraleinheit umfasst:
- einen Speicher oder eine Anordnung von Speichern (18, 20, 22), enthaltend:
• einen generischen Code der Funktion, in dem jeder Parameter der Funktion als Variable codiert ist, so dass dieser generische Code nicht selbst den Wert dieses Parameters enthält, sondern eine Operation zum Lesen von dessen Wert an einer vom generischen Code spezifizierten Adresse enthält,
• mehrere spezialisierte Codes dieser Funktion, die in der Maschinensprache des Mikroprozessors geschrieben sind, wobei jeder spezialisierte Code, wenn er vom Mikroprozessor ausgeführt wird, die gleiche Funktion wie der generische Code realisiert, aber in dem besonderen Fall, in dem mindestens ein Parameter der Funktion spezialisiert ist, wobei die Spezialisierung eines Parameters der Funktion darin besteht, diesem Parameter einen spezifischen Wert zuzuweisen und diesen Parameter dann nicht mehr als Variable, sondern als Konstante zu behandeln, so dass der spezialisierte Code keinen Vorgang zum Lesen seines Werts an einer Adresse außerhalb des kontinuierlichen Adressenbereichs, in dem dieser spezialisierte Code gespeichert ist, umfasst, die gespeicherten spezialisierten Codes sich voneinander durch den Wert, der demselben spezialisierten Parameter zugewiesen ist, oder durch den Parameter, der spezialisiert wurde, unterscheiden,
- einen Mikroprozessor (2), der programmiert ist, um die folgenden Schritte auszuführen:
c) für jeden spezialisierten Code das Speichern einer Adresse, an der dieser spezialisierte Code in dem Speicher gespeichert ist, in einer Tabelle,
d) bei der Ausführung des Programms erhält der Mikroprozessor einen numerischen Wert für jeden Parameter der Funktion, dann
e) sucht der Mikroprozessor in der Tabelle die Adresse eines spezialisierten Codes, der geeignet ist, wenn er vom Mikroprozessor ausgeführt wird, die parametrisierte Funktion mit den im Schritt d) erhaltenen Werten zu realisieren, dann
f) realisiert der Mikroprozessor, wenn eine solche Adresse in der Tabelle vorkommt, die Funktion, indem er den im Speicher an dieser Adresse gespeicherten spezialisierten Code direkt ausführt, ohne den generischen Code zu verwenden, und anderenfalls
g) realisiert der Mikroprozessor diese Funktion unter Verwendung ihres generischen Codes,
**dadurch gekennzeichnet, dass** der Mikroprozessor (2) auch so programmiert ist, dass:
- der Schritt c) auch das Speichern, jeder Adresse eines spezialisierten Codes zugeordnet, des Werts jedes seiner spezialisierten Parameter umfasst und
- der Schritt e) für eine in der Tabelle gespeicherte Adresse umfasst:
e1) das Vergleichen des Werts jedes spezialisierten Parameters, der in der Tabelle dieser Adresse zugeordnet ist, mit dem Wert desselben Parameters, der im Schritt d) erhalten wurde, dann
e2) wenn bei der Operation e1) für jeden spezialisierten Parameter dessen in der Tabelle gespeicherter Wert dem in Schritt d) erhaltenen Wert dieses Parameters entspricht, wählt der Mikroprozessor diese Adresse als Adresse des spezialisierten Codes, der geeignet ist, die parametrisierte Funktion mit den im Schritt d) erhaltenen Werten zu realisieren, und wählt der Mikroprozessor andernfalls eine folgende Adresse in der Tabelle, für welche die Operationen e1) und e2) noch nicht ausgeführt wurden, und wiederholt dann die Operationen e1) und e2) für diese folgende Adresse, und
- der Mikroprozessor jedes Mal, wenn die Adresse eines spezialisierten Codes in der Tabelle geändert, gelöscht oder hinzugefügt werden muss, eine in der Maschinensprache des Mikroprozessors geschriebene Suchroutine generiert und im Speicher speichert, wobei diese Suchroutine geeignet ist, wenn sie vom Mikroprozessor ausgeführt wird, die Operationen e1) und e2) zu realisieren, wobei diese Suchroutine, als Konstante codiert, jede Adresse und jeden Wert von spezialisierten Parametern enthält, die in der Tabelle gespeichert sind, so dass die Suchroutine keine Operation zum Lesen des Werts eines spezialisierten Parameters oder der Adresse eines spezialisierten Codes außerhalb des kontinuierlichen Adressbereichs, in dem diese Suchroutine gespeichert ist, enthält, und
- der Mikroprozessor jedes Mal, wenn der Schritt e) ausgeführt wird, diese in seinem Speicher gespeicherte Suchroutine direkt ausführt.

## Claims

1. Method for executing a computer program including at least one parameterized function capable of being executed one or more times during the execution of the program, this function including at least one parameter the value of which is obtained at the instant when the function is called in order to be executed by a microprocessor or during execution thereof by the microprocessor, this method including:
a) providing a generic code for the function, in which code each parameter of the function is encoded as a variable such that this generic code does not itself contain the value of this parameter, but contains an operation of reading its value from an address specified by the generic code,
b) recording (60), in a memory, a plurality of specialized codes for this function that are written in the machine language of the microprocessor, each specialized code performing, when it is executed by the microprocessor, the same function as the generic code but, in the particular case where at least one parameter of the function is specialized, the specialization of a parameter of the function, consisting in assigning a specific value to this parameter and then in processing this parameter no longer as a variable but as a constant, such that the specialized code does not include any operation of reading its value from an address situated outside of the continuous range of addresses where this specialized code is recorded, the recorded specialized codes differing from one another by the value assigned to the same specialized parameter or by the parameter that has been specialized,
c) for each specialized code, storing (60), in a table, an address where this specialized code is recorded in the memory,
d) when the program is executed, the microprocessor obtains (50) a numerical value for each parameter of the function, and then
e) the microprocessor looks up (52), in the table, the address of a specialized code that is able to perform the parameterized function with the values obtained during step d) when it is executed by the microprocessor, and then
f) if such an address exists in the table, the microprocessor performs the function by directly executing (54) the specialized code recorded in the memory at this address without using the generic code, and if not
g) the microprocessor performs (58) this function using its generic code, **characterized in that**:
- step c) also includes storing (60), in association with each address of a specialized code, the value of each of its specialized parameters, and
- step e) includes, for an address recorded in the table:
e1) comparing (52) the value of each specialized parameter, associated with this address in the table, with the value, obtained during step d), of the same parameter, and then,
e2) if during operation e1), for each specialized parameter, its value stored in the table corresponds to the value, obtained during step d), of this parameter, then the microprocessor selects (52) this address as an address for the specialized code that is able to perform the parameterized function with the values obtained during step d), and, if not, the microprocessor selects a following address in the table for which operations e1) and e2) have not yet been performed, and then reiterates operations e1) and e2) for this following address, and
- each time the address of a specialized code has to be modified, deleted or added to the table, the microprocessor generates (60) and records in the memory a lookup routine written in the machine language of the microprocessor, this lookup routine, when it is executed by the microprocessor, being able to perform operations e1) and e2), this lookup routine containing, encoded as a constant, each address and each value of specialized parameters stored in the table such that the lookup routine does not include any operation of reading the value of a specialized parameter or the address of a specialized code outside of the continuous range of addresses where this lookup routine is recorded, and
- each time step e) is executed, the microprocessor directly executes this lookup routine that is recorded in its memory.

2. Method according to Claim 1, wherein:
- generating (60) the lookup routine includes, for each address of a specialized code contained in the table, generating a set of instructions that encodes a direct conditional branch to this address of the specialized code, and
- when this conditional branch is executed by the microprocessor, only if the value of each specialized parameter associated with this address in the table is equal to the value, obtained during step d), of the same parameter, then the microprocessor replaces the current value of an ordinal counter of the microprocessor with this address, such that the next instruction executed by the microprocessor is directly the first instruction of this specialized code.

3. Method according to either one of the preceding claims, wherein:
- the method includes executing (56) a statistical data collection routine that increments a counter, associated as the same time with the parameterized function, with a parameter of this parameterized function and with a predetermined value of this parameter, each time a value, obtained during step d), of this parameter of the parameterized function is equal to this predetermined value and, alternately, does not increment this counter if the value obtained during step d) for this parameter is different from this predetermined value,
- in response to the crossing of a pre-calculated threshold by this counter, generating (60), during a step h), a new specialized code for the parameterized function by specializing the parameter associated with this counter with the predetermined value associated with this counter, and then storing this new specialized code in the memory and updating the table so as to incorporate therein the address where this new specialized code is recorded and the value of the specialized parameter.

4. Method according to Claim 3, wherein the method includes calculating the pre-calculated threshold on the basis of a relationship Kgen/[Klib-Kdyn], where:
- Kgen is a cost to execute step h),
- Kdyn is a cost to execute step f),
- Klib is a cost to execute step g), and
the costs Kgen, Kdyn and Klib are each respective quantities, which have been prerecorded or measured beforehand, of one and the same physical variable or of one and the same combination of physical variables that varies depending on whether the microprocessor executes step f) or step g).

5. Method according to any one of the preceding claims, wherein, when the memory is full, each time a new specialized code has to be recorded in the memory, the microprocessor records this new specialized code in the place of the oldest specialized code contained in this memory.

6. Method according to Claims 2 and 3 taken together, wherein only if none of the direct conditional branches of the lookup routine has triggered the execution of a specialized code, then the statistical data collection routine is executed.

7. Method according to any one of the preceding claims, wherein:
- steps a) to g) are executed alternately for a first and then a second parameterized function, respectively, the generic codes of which are different, and
- step c) furthermore includes storing (60), in the table, an identifier of the generic code for the function that has been specialized, which identifier is associated with the address of this specialized code,
- during step d), the microprocessor also obtains the identifier of the generic code for the function to be executed,
- during operation e1), the microprocessor compares the identifier, associated with the address of the specialized code in the table, with the identifier obtained during step d), and
- during operation e2), only if, during operation e1), the identifier associated with the address of the specialized code corresponds to the identifier obtained during step d) and only if the value of each specialized parameter associated with this specialized code address in the table corresponds to the value obtained during step d), then the microprocessor selects this address as an address for the specialized code that is able to perform the parameterized function with the values obtained during step d).

8. Method according to any one of the preceding claims, wherein:
- steps a) to g) are executed for a parameterized function including at least a first and a second parameter the values of which are obtained at the instant when this function is called in order to be executed by the microprocessor or during execution thereof by the microprocessor,
- step b) includes:
- recording a first specialized code obtained by specializing the first parameter of the function with a first specific value, and
- recording a second specialized code obtained by specializing the second parameter of the function with a second specific value,
- step c) furthermore includes storing in the table, in association with each address of a specialized code in this table, an identifier of the specialized parameter(s) for obtaining the specialized code recorded at this address,
- during operation e1), the microprocessor identifies the parameter(s) of the function that have been specialized in order to generate the specialized code recorded at this address using the identifier of the specialized parameter(s) that are associated, in the table, with this address, and then the microprocessor compares only the values, obtained during step d), of the parameters of the function that are thus identified with the values of these same parameters associated with this address in the table.

9. Information recording medium, **characterized in that** it includes instructions for executing a method according to any one of the preceding claims when these instructions are executed by a microprocessor.

10. Computer program, **characterized in that** it includes instructions for executing a method according to any one of Claims 1 to 8 when these instructions are executed by a microprocessor.

11. Electronic central unit for executing a computer program including at least one parameterized function capable of being executed one or more times during the execution of the program, this function including at least one parameter the value of which is obtained at the instant when the function is called in order to be executed by a microprocessor or during execution thereof by the microprocessor, this central unit including:
- a memory or a set of memories (18, 20, 22) containing:
• a generic code for the function, in which code each parameter of the function is encoded as a variable such that this generic code does not itself contain the value of this parameter, but contains an operation of reading its value from an address specified by the generic code,
• a plurality of specialized codes for this function that are written in the machine language of the microprocessor, each specialized code performing, when it is executed by the microprocessor, the same function as the generic code but, in the particular case where at least one parameter of the function is specialized, the specialization of a parameter of the function, consisting in assigning a specific value to this parameter and then in processing this parameter no longer as a variable but as a constant, such that the specialized code does not include any operation of reading its value from an address situated outside of the continuous range of addresses where this specialized code is recorded, the recorded specialized codes differing from one another by the value assigned to the same specialized parameter or by the parameter that has been specialized,
- a microprocessor (2) programmed to execute the following steps:
c) for each specialized code, storing, in a table, an address where this specialized code is recorded in the memory,
d) when the program is executed, the microprocessor obtains a numerical value for each parameter of the function, and then
e) the microprocessor looks up, in the table, the address of a specialized code that is able to perform the parameterized function with the values obtained during step d) when it is executed by the microprocessor, and then
f) if such an address exists in the table, the microprocessor performs the function by directly executing the specialized code recorded in the memory at this address without using the generic code, and if not
g) the microprocessor performs this function using its generic code,
**characterized in that** the microprocessor (2) is also programmed such that:
- step c) also includes storing, in association with each address of a specialized code, the value of each of its specialized parameters, and
- step e) includes, for an address recorded in the table:
e1) comparing the value of each specialized parameter, associated with this address in the table, with the value, obtained during step d), of the same parameter, and then,
e2) if during operation e1), for each specialized parameter, its value stored in the table corresponds to the value, obtained during step d), of this parameter, then the microprocessor selects this address as an address for the specialized code that is able to perform the parameterized function with the values obtained during step d), and, if not, the microprocessor selects a following address in the table for which operations e1) and e2) have not yet been performed, and then reiterates operations e1) and e2) for this following address, and
- each time the address of a specialized code has to be modified, deleted or added to the table, the microprocessor generates and records in the memory a lookup routine written in the machine language of the microprocessor, this lookup routine, when it is executed by the microprocessor, being able to perform operations e1) and e2), this lookup routine containing, encoded as a constant, each address and each value of specialized parameters stored in the table such that the lookup routine does not include any operation of reading the value of a specialized parameter or the address of a specialized code outside of the continuous range of addresses where this lookup routine is recorded, and
- each time step e) is executed, the microprocessor directly executes this lookup routine that is recorded in its memory.
